(19) Europäisches Patentamt / European Patent Office / Office européen des brevets

(11) **EP 4 457 253 B1**

(12) **EUROPEAN PATENT SPECIFICATION**

(45) Date of publication and mention of the grant of the patent:
**02.04.2025 Bulletin 2025/14**

(21) Application number: **24710122.3**

(22) Date of filing: **13.03.2024**

(51) International Patent Classification (IPC):
***C08F 120/56*** $^{(2006.01)}$ ***C09K 8/68*** $^{(2006.01)}$
***C09K 8/88*** $^{(2006.01)}$

(52) Cooperative Patent Classification (CPC):
(C-Sets available)
**C09K 8/68; C08F 120/58; C09K 8/885;**
C09K 2208/28 (Cont.)

(86) International application number:
**PCT/EP2024/056678**

(87) International publication number:
**WO 2024/189082 (19.09.2024 Gazette 2024/38)**

(54) **FRACTURING FLUID COMPRISING A POLYMER IN A CRYSTALLINE FORM OF 2-ACRYLAMIDO-2-METHYLPROPANESULPHONIC ACID SODIUM SALT AND HYDRAULIC FRACTURING METHOD**

FRAKTURIERUNGSFLÜSSIGKEIT MIT EINEM POLYMER IN KRISTALLINER FORM VON 2-ACRYLAMIDO-2-METHYLPROPANSULFONSÄURENATRIUMSALZ UND VERFAHREN ZUR HYDRAULISCHEN FRAKTURIERUNG

FLUIDE DE FRACTURATION COMPRENANT UN POLYMÈRE SOUS FORME CRISTALLINE DE SEL DE SODIUM D'ACIDE 2-ACRYLAMIDO-2-MÉTHYLPROPANESULFONIQUE ET PROCÉDÉ DE FRACTURATION HYDRAULIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.03.2023 FR 2302305**

(43) Date of publication of application:
**06.11.2024 Bulletin 2024/45**

(73) Proprietor: **SNF Group**
**42160 Andrézieux-Bouthéon (FR)**

(72) Inventors:
- **FAVERO, Cédrick**
  **42160 Andrézieux-Bouthéon (FR)**
- **LEGRAS, Benoit**
  **42160 Andrézieux-Bouthéon (FR)**
- **KIEFFER, Johann**
  **42160 Andrézieux-Bouthéon (FR)**

(74) Representative: **Cabinet Laurent & Charras**
**Le Contemporain**
**50 Chemin de la Bruyère**
**69574 Dardilly Cedex (FR)**

(56) References cited:
**EP-B1- 3 601 220**
**EP-B1- 3 601 222**
**WO-A1-2018/172682**
**WO-A1-2018/172684**
**CN-A- 113 528 113**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 8/12, C08F 220/56;**
**C08F 220/56, C08F 220/585;**
**C08F 220/56, C08F 220/585, C08F 220/06**

## Description

### Field of the invention

The invention relates to a fracturing fluid comprising at least one proppant and at least one water-soluble polymer prepared from the crystalline form of 2-acrylamido-2-methylpropanesulphonic acid sodium salt.

The invention also relates to a method for the hydraulic fracturing of unconventional underground hydrocarbon reservoirs (oil and/or gas) using said fluid.

### Prior art

The production of hydrocarbons (oil and/or gas) contained in unconventional underground reservoirs has been developing for several years and requires opening fractures in the reservoir for economical hydrocarbon production.

In the remainder of the description of the prior art and of the invention, the term "unconventional underground reservoirs" or "unconventional reservoirs" designates deposits requiring particular extraction technologies because they do not exist in the form of an accumulation in a porous and permeable rock (see Les hydrocarbures de roche-mère en France Rapport provisoire - CGIET n° 2011-04-G -, Sustainable Development, Transport and Housing - April 2011*)*. For unconventional gas reservoirs, mention may be made of shale gas, coal bed methane or tight gas. For unconventional oil reservoirs, mention may be made of heavy oil, shale oil or tight oil.

The reserves contained in unconventional reservoirs are enormous and extremely extensive in previously unworkable areas such as source rock hydrocarbons such as shale, tight gases, and coal gas. In the United States, shale gas is widely exploited and now accounts for 46% of all natural gas produced in the United States, up from 28% in 1998. The very extensive basins are known as Barnett Shale, Ville Fayette Shale, Mowry Shale, Marcellus Shale, Utica Shale... The exploitation of tight reservoirs has been made possible by an evolution of drilling techniques.

Production techniques have indeed evolved from vertical wells to horizontal wells, reducing the number of production wells required and their footprint on the ground and making it possible to better cover the volume of the reservoir to recover as much gas or oil as possible. However, the permeabilities are insufficient for the hydrocarbon to migrate from the source rock to the well easily, and thus make it possible to economically produce the gas or oil in quantity. It is therefore necessary to increase the permeability and the production surfaces by stimulation operations and in particular by hydraulic fracturing of the rock in contact with the well.

*Hydraulic fracturing*

The purpose of hydraulic fracturing is to create additional permeability and generate larger gas or oil production surfaces. Indeed, the low permeability, the natural barriers of compact layers and the waterproofing by drilling operations strongly limit production. The gas or oil contained in the unconventional reservoir cannot easily migrate from the rock to the well without stimulation.

These hydraulic fracturing operations on horizontal wells began in 1960 in Appalachia and, today, several tens of thousands of operations have taken place in the United States.

Study, reservoir modelling, drilling, cementing and stimulation technologies have become increasingly sophisticated and implement equipment enabling to perform these operations in increasingly short times with accurate analysis of the results.

*Stimulation of the reservoir by hydraulic fracturing*

These operations consist of injecting water at high pressure and very high flow rate so as to create fractures distributed perpendicularly to the production wells. The procedure is generally carried out in several steps in order to create fractures along the entire length of the horizontal well, which makes it possible to cover a maximum volume of the reservoir.

In order to keep these fractures open, a proppant (e.g. sand, plastics or calibrated ceramics) is added so as to prevent these fractures from closing and to maintain the capillarity created after the injection is stopped.

Water alone is not enough to achieve good proppant placement efficiency due to its low viscosity. This limits its ability to hold the proppant in place in fractures. To solve this problem, fracturing fluids containing viscosifying compounds have been developed.

By definition, it is considered (in the description of the prior art and the invention) that a compound is viscosifying when it increases the viscosity of the solution in which it is dissolved.

In addition to having viscosifying properties, the compound must have a particular rheological profile. Indeed, the compound must be able to generate a low viscosity so as not to interfere with the transport and pumping of the fluid containing the proppant during the high shears undergone during the injection of the fracturing fluid. Once injected, this

same compound must be able to generate sufficient viscosity when the shear decreases to support the proppant in order to maintain it in the fractures.

The viscosifying compound, generally a polymer, must therefore provide shear-thinning properties to the solution in order to have a relatively low viscosity during injection (at high shear) and a high viscosity in order to keep the proppant suspended at the fracture when the shear decreases.

The viscoelastic properties of polymers in solution should also be taken into consideration. This viscoelasticity, and its importance in the application, is described in document SPE 147206 (Fracturing Fluid Comprised of Components Sourced Solely from the Food Industry Provides Superior Proppant Transport - David Loveless, Jeremy Holtsclaw, Rajesh Saini, Phil Harris, and Jeff Fleming, SPE, Hallibur*on* ) through visual observations in static or dynamic experiments, or by rheology measurements, such as the measurement of viscous and elastic moduli (G' and G''), or the rheometer measurement of viscosity as a function of shear. Thus, elastic properties will be advantageous for ensuring the transport and suspension of the fracture proppant.

The choice of polymer is therefore not obvious and requires a thorough rheological study in order to obtain satisfactory results.

Among the viscosifying compounds of aqueous solutions belonging to the state of the art, mention may be made of natural substances such as guar gums and their derivatives such as hydroxypropylguar (HPG), or carboxymethylhydroxypropyl guar (CMHPG); cellulose derivatives such as carboxymethyl cellulose or hydroxyethyl cellulose. These compounds are described in particular in U.S. Pat. Nos. 4,033,415, 3,888,312 and 4,801,389. In document SPE 152596 (Hydraulic Fracturing 101: What Every Representative, Environmentalist, Regulator, Reporter, Investor, University Researcher, Neighbor and Engineer Should Know About Estimating Frac Risk and Improving Frac Performance in Unconventional Gas and Oil Wells - George E. King, Apache Corporation), the latest advances in fracturing fluid performance are discussed in detail.

However, these natural substances, and in particular guar derivatives, are also useful in other applications, such as the food industry or the textile industry, and the boom in the exploitation of oil and gas resources from unconventional reservoirs competes with these other applications. This creates pressure on the availability of these products and leads to cost issues.

Other compounds derived from petrochemicals may have viscosifying properties. Mention may be made of synthetic polymers. Poly(meth)acrylamides, optionally partially hydrolysed, and poly(meth)acrylates and their polymers are particularly known. These polymers develop a viscosity thanks in particular to their molar mass and the interchain ionic repulsions. These polymers are described in patents GB 951147, U.S. Pat. No. 3,727,689, U.S. Pat. No. 3,841,402 or U.S. Pat. No. 3,938,594. The mechanism governing viscosity is related to an increase in hydrodynamic volume through inter and intra-chain repulsions, inter-chain entanglements, etc.

However, in the presence of high salinity or a high temperature of use, these polymers do not develop strong entanglements and repulsions, which results in a strong decrease in their viscosifying power, especially after having undergone the shearing of the pumping step. Moreover, these polymers generally do not have sufficient viscoelastic properties to support the proppant in the fracture. It is necessary to increase the dosage of these polymers to high levels to obtain the suspension properties of the proppant. However, dosing levels are not economically viable.

The polymers used to have viscosifying properties can advantageously also be friction reducers making it possible to reduce the load drop in a turbulent medium and greatly increase the flow rate at the same power and pipe diameter.

Documents WO2018/172684, EP 3 601 222, CN 113 528 113 relate to the use of polymers from hydrated crystalline form of 2-acrylamido-2-methylpropane sulfonic acid in the field of fracturing fluids.

Sodium 2-acrylamido-2-methylpropanesulfonate-based synthetic polymers have interesting friction reduction properties in aqueous solution. These polymers are also known for their resistance to shearing and thermal degradation, especially in saline solutions. However, the obtention of sodium 2-acrylamido-2-methylpropanesulfonate-based polymers of very high molecular weight is difficult, not to mention that these polymers have solubility problems when their molecular weight increases. However, to obtain an optimal friction reduction phenomenon and a high viscosity generation, it is essential that the polymer is dissolved quickly, in particular in saline solution, and that it has a very high molecular weight.

## Disclosure of the invention

The Applicant has found and developed a fracturing fluid that makes it possible to have a very high friction reduction effect, while ensuring an improved viscosifying effect in a saline solution (brine) or a non-saline solution (water).

In addition, the good solubility of the polymer of the fracturing fluid, combined with its sulfonic anionic character, makes it possible to avoid its adsorption on the rock, which induces a recovery of conductivity and therefore an increase in the hydrocarbon production yield (oil and/or gas). Oil (or oils) from an underground reservoir is also called petroleum. It is usually a mixture of hydrocarbons.

According to the present invention, the better performance of the polymer-containing fracturing fluid, which is

obtained from the crystalline form of 2-acrylamido-2-methylpropanesulphonic acid sodium salt, referred herein as ATBS.Na, allows the reduction of the amount of product (in particular the polymer) required and therefore the reduction of the overall water consumption and the emissions of greenhouse gases such as $CO_2$.

A first aspect of the invention relates to a fracturing fluid comprising at least one proppant and at least one water-soluble polymer obtained from the crystalline form of ATBS.Na.

A second aspect of the invention relates to a method for producing a fracturing fluid with at least one water-soluble polymer obtained from the crystalline form of ATBS.Na.

A third aspect of the invention relates to a method for the hydraulic fracturing of an unconventional underground reservoir of oil or gas using the fracturing fluid according to the invention.

A fourth aspect of the invention relates to a method for friction reduction using a fracturing fluid in an operation for the hydraulic fracturing of an unconventional underground reservoir of oil or gas using the fracturing fluid according to the invention.

The term "polymer" should be understood to mean a homopolymer or a copolymer. The term "copolymer" should be understood to mean a polymer obtained from at least two different monomers. It may therefore be a copolymer of at least two monomers chosen from anionic monomers, cationic monomers, non-ionic monomers, zwitterionic monomers, hydrophobic monomers and the mixtures thereof.

The term "hydrophilic monomer" should be understood to mean a monomer that has an octanol-water partition coefficient, $K_{ow}$, equal or less than 1, in which the partition coefficient $K_{ow}$ is determined at 25°C in an octanol-water mixture with a volume ratio of 1/1, at a pH of between 6 and 8.

The term "hydrophobic monomer" should be understood to mean a monomer that has an octanol-water partition coefficient, $K_{ow}$, greater than 1, in which the partition coefficient $K_{ow}$ is determined at 25°C in an octanol-water mixture with a volume ratio of 1/1, at a pH of between 6 and 8.

The term "crystal" or "crystalline form" refers to a solid material whose constituents (such as atoms, molecules, or ions) are arranged in a highly ordered microscopic structure, forming a crystal lattice that extends in all directions. It does not encompass amorphous solid.

The octanol-water partition coefficient, $K_{ow}$, represents the ratio of concentrations (g/L) of a monomer between the octanol phase and the aqueous phase. It is defined as follows:

[Math 1]

$$K_{ow} = \frac{[monomer]octanol}{[monomer]water}$$

By definition, a water-soluble polymer is a polymer that gives an aqueous solution without insoluble particles when it is dissolved while stirring at 25°C and with a concentration of 50 $g.L^{-1}$ in water.

"X and/or Y" should be understood to mean "X", or "Y", or "X and Y".

The invention also includes all possible combinations of the various embodiments disclosed, whether they are preferred embodiments or given by way of example. Furthermore, when ranges of values are indicated, the limit values are included in these ranges. The disclosure also includes all of the combinations between the limit values of these ranges of values. For example, the ranges of values "1-20, preferably 5-15" imply disclosure of the ranges "1-5", "1-15", "5-20" and "15-20" and the values 1, 5, 15 and 20.

**Crystalline form of ATBS.Na**

Crystalline form of ATBS.Na has an X-ray powder diffraction pattern comprising peaks at 11.7°; 12.2°; 13.2°, 13.5°, 15.6°, 16.8°; 17.8°; 18.5°; 19.1°; 20.6°; 21.4°; 23.3°; 25.1°; 25.8°; 26.9°; 29.1°; 29.5°; 31.0°; 33.0°; 33.6°; 34.4°; 35.2°; 35.9°; 37.1°; 38.4°; 39.6°; 41.1°; 42.9°; 45.1°; 46.0°; 47.2°; 47.6°. The uncertainty of these peaks is generally of the order of +/- 0.1°.

X-ray crystallography, radiocrystallography or X-ray diffractometry is an analytical technique used to study the structure of crystalline matter on an atomic scale. It is based on the physical phenomenon of X-ray diffraction. A diffractometer with a copper source can be used.

A powder formed from a particular crystalline phase always shows diffraction peaks in the same directions. This diffraction pattern thus forms a true signature of the crystalline phase. It is therefore possible to determine the nature of each crystalline phase within a mixture or a pure product.

This signature is specific to each organic or inorganic crystalline compound, and is in the form of a list of peaks positioned at an angle of $2\theta$ (2-theta).

This technique is used to characterize matter, in particular the different crystalline forms that can exist for the

same chemical molecule.

The crystalline form of ATBS.Na has a Fourier-transform infrared spectrum comprising peaks at 3576 $cm^{-1}$, 3485 $cm^{-1}$, 3310 $cm^{-1}$, 3079 $cm^{-1}$, 2975 $cm^{-1}$, 1658 $cm^{-1}$, 1629 $cm^{-1}$, 1543 $cm^{-1}$, 1403 $cm^{-1}$, 1321 $cm^{-1}$, 1301 $cm^{-1}$, 1205 $cm^{-1}$, 1187 $cm^{-1}$, 1163 $cm^{-1}$, 1046 $cm^{-1}$, 980 $cm^{-1}$, 629 $cm^{-1}$. The uncertainty of these peaks is generally of the order of +/- 8 $cm^{-1}$.

The infrared measurement is carried out by Fourier transform, for example using a Perkin Elmer Spectrum 100 spectrometer fitted with a single reflection ATR polarization accessory, with an accuracy of 8 $cm^{-1}$.

Fourier-transform infrared spectroscopy is the analysis of the vibrations emitted, absorbed or scattered by molecules. This technique is sensitive to so-called short interactions (influence of the unit mesh on the bonds). In most cases, the Fourier-transform infrared spectra of different crystalline systems differ significantly. The Fourier-transform infrared spectrum therefore reflects the details of the crystalline structure of a chemical compound.

Generally, and unless otherwise indicated, the X-ray diffraction pattern and the infrared spectrum are obtained at 20°C and at a pressure of 1 atmosphere absolute (101,325 Pa).

The crystalline form of ATBS.Na has a minimum ignition energy greater than 500 mJ, preferably greater than 1000 mJ (1 mJ = $10^{-3}$ joule).

The minimum ignition energy represents the minimum energy that must be supplied to a product (chemical compound) to cause it to ignite. The energy may be electrical or thermal. The minimum ignition energy is an essential piece of information when considering the risk of explosion during product handling (transfer, storage, reaction, shaping, etc.).

The minimum ignition energy depends on the properties of the powder (composition) and its macromolecular structure (particle size, crystalline form, specific surface area).

In the case of solids, this energy is the minimum energy of an electric spark likely to ignite a cloud of dust. The higher the value of the minimum ignition energy, the less risk the solid presents when used, handled or stored.

The minimum ignition energy is measured in accordance with standard NF EN 13821.

The crystalline form of ATBS.Na exhibits 4 thermal phenomena with the differential scanning calorimetry technique, at 49.8°C, 144.8°C; 169.8°C and 254.3°C. The uncertainty relating to the observation of these phenomena is generally of the order of 10°C, advantageously 5°C or less.

The thermal phenomena are measured by differential scanning calorimetry (DSC). This technique uses the measurement of the variation in heat associated with the thermal denaturation of the compound when it is heated at constant speed, for example with a heating ramp of 10°C/minute.

**Method for producing the crystalline form of the sodium salt**

The method for producing the crystalline form of ATBS.Na comprises at least the following successive steps:

1) mixing of 2-acrylamido-2-methylpropanesulphonic acid with an aqueous solution $SA_1$ and at least one sodium salt base, advantageously for at least 1 minute, in order to form an aqueous solution or an aqueous suspension $SA_2$;
2) distillation, at a pressure of 700 mbar or less, of the aqueous solution or of the aqueous suspension $SA_2$ in order to form a suspension $S_1$;
3) solid-liquid separation of the suspension $S_1$ and isolation of the crystals of the suspension $S_1$ obtained at the end of step 2) in the form of a composition $C_1$.

The crystals obtained are in the crystalline form of ATBS.Na.

In step 1), "sodium salt(s) base" should be understood to mean at least one inorganic sodium salt Brønsted base, for example sodium hydroxide, sodium carbonate, sodium bicarbonate or mixtures thereof.

The temperature and the mixing time of step 1) may vary as a function, in particular, of the concentration of 2-acrylamido-2-methylpropanesulphonic acid (ATBS). A person skilled in the art knows how to adapt the temperature variation and the mixing time to optimize the formation of the crystals.

The method for producing the crystalline form of the sodium salt can be carried out on any form of ATBS, such as, for example, the needle-shape form or the hydrated form.

The production method may be carried out on ATBS of any degree of purity.

Therefore, the method may be carried out downstream of any type of method for producing ATBS. It may also be carried out on crystals of ATBS that have already been obtained.

**Step 1) of the method for producing the crystalline form of the sodium salt:**

ATBS is produced by a production method as previously described (acrylonitrile, fuming sulphuric acid and isobutylene). The ATBS may be in the form of fine powder or shaped in a controlled manner by a method such as compaction, granulation or extrusion.

The ATBS may be added to an aqueous solution $SA_1$ before, after or in parallel with the sodium salt base, and

preferably in parallel. Preferably, the aqueous solution $SA_1$ is water.

The sodium salt base may be added as an aqueous solution. In this case, the aqueous solution of sodium salt base can be partially or totally the aqueous solution $SA_1$.

Advantageously, the concentration of ATBS sodium salt in the aqueous solution or in the aqueous suspension $SA_2$ is between 1% by weight and saturation, preferably between 10% by weight and saturation, more preferably between 20% by weight and saturation, more preferably between 30% by weight and saturation, more preferably between 40% by weight and saturation, and even more preferably between 50% by weight and saturation, by weight relative to the weight of the aqueous solution or of the aqueous suspension $SA_2$.

The ATBS and the sodium salt base may be added all at once or in several stages. They are preferably added in several stages. They are preferably added all at once.

When they are added in several stages, the ATBS and the sodium salt base are added in fractions.

When the ATBS and the sodium salt base are added in fractions, there is no limit to the number of fractions, advantageously there are at least two fractions, and preferably at least three fractions.

There is no limitation to the order of addition of the ATBS and the sodium salt base. They may be added at the same time (i.e., in parallel), one after the other (the ATBS first, then the sodium salt base, or vice versa), or alternately (a first fraction pf ATBS, then a first fraction of the sodium salt base, followed by a second fraction of ATBS then a second fraction of the sodium salt base, and so on); they are preferably added at the same time.

When they are added one after the other or alternately, the second compound (whether it is the ATBS or the sodium salt base) can start being added before the first compound has finished being added.

A first fraction F1 of ATBS advantageously represents at least 1 mol% of the total of the ATBS present in the aqueous solution or the aqueous suspension $SA_2$, preferably at least 5 mol%, more preferably at least 10 mol%, even more preferably at least 15 mol% and even more preferably at least 20 mol%.

A second fraction F2 of ATBS advantageously represents at least 1 mol% of the total of the ATBS present in the aqueous solution or the aqueous suspension $SA_2$, preferably at least 5 mol%, more preferably at least 10 mol%, even more preferably at least 15 mol% and even more preferably at least 20 mol%.

A third fraction F3 of ATBS advantageously represents at least 1 mol% of the total of the ATBS present in the aqueous solution or the aqueous suspension $SA_2$, preferably at least 5 mol%, more preferably at least 10 mol%, even more preferably at least 15 mol% and even more preferably at least 20 mol%.

In one particular embodiment, the method is carried out continuously, in which case the ATBS and the sodium salt base are added continuously.

The quantity of ATBS in the aqueous solution or the aqueous suspension $SA_2$ is advantageously between 10 and 90% by weight relative to the total weight of the aqueous solution or of the aqueous suspension $SA_2$, preferably between 20 and 85% by weight, more preferably between 30 and 80% by weight.

The mixing of step 1) (ATBS + sodium salt base) is advantageously carried out at a temperature of between 0 and 90°C, preferably between 5 and 60°C, more preferably between 10 and 40°C, in order to obtain the aqueous solution or the aqueous suspension SA2.

In one particular embodiment, the aqueous solution or the suspension $SA_2$ may comprise one or more organic solvents.

In some embodiments, the aqueous solution $SA_1$ may comprise one or more organic solvents.

The quantity of organic solvent may vary as a function of the temperature and the quantity of ATBS or sodium salt base. This quantity is not limited, provided it does not prevent the crystalline form of ATBS.Na from being obtained. A person skilled in the art knows how to determine this limit, which is a routine task. Generally, the aqueous solution or the aqueous suspension $SA_2$ comprises more water (by volume) than organic solvent.

The organic solvent or solvents are advantageously chosen from the following compounds:

- organic acids, advantageously carboxylic acids comprising between 1 and 8 carbon atoms;
- amides advantageously comprising between 1 and 8 carbon atoms;
- alcohols advantageously comprising between 1 and 8 carbon atoms;
- ketones advantageously comprising between 3 and 8 carbon atoms;
- ethers advantageously comprising between 2 and 8 carbon atoms;
- esters advantageously comprising between 2 and 8 carbon atoms;
- alkanes advantageously comprising between 4 and 8 carbon atoms, preferably between 5 and 6 carbon atoms;
- halogenated hydrocarbon compounds advantageously comprising between 1 and 8 carbon atoms;
- nitriles advantageously comprising between 1 and 8 carbon atoms; or
- mixtures thereof.

When an organic solvent is used in the invention, the temperature may be adjusted so that the solvent + water mixture remains in liquid form.

These compounds may be linear or branched. They may be saturated or comprise unsaturated bonds. An unsaturated bond corresponds to a double or triple bond (for example C=C or C≡C)..

The organic solvent is preferably chosen from acrylonitrile, isopropanol, acrylic acid, acetic acid or mixtures thereof. The organic solvent is preferably acrylonitrile.

The organic solvent is generally in liquid form at the temperature at which steps 2) and 3) are carried out. Furthermore, it is advantageously partially miscible in water, and preferably completely miscible in water.

The organic solvent may, if necessary, be used to solubilize any impurities or by-products present with the ATBS used to form the aqueous solution or the aqueous suspension $SA_2$. However, ATBS is not necessarily soluble in the solvent.

In a preferred embodiment according to the invention, the aqueous solution or the aqueous suspension $SA_2$ does not contain organic solvent.

In a preferred embodiment according to the invention, the aqueous solution $SA_1$ does not contain organic solvent.

The time allowed for mixing the aqueous solution $SA_1$ and the ATBS is advantageously at least 1 minute, preferably between 1 minute and 600 minutes, more preferably between 5 minutes and 400 minutes, and even more preferably between 10 minutes and 240 minutes.

The compounds of step 1) can be mixed using various technologies. Examples include, but are not limited to, reactors with stirrers, loop reactors, static mixers, microreactors, piston reactors, agitated filter dryers, for example by Nutsche, paddle mixers, twin-cone mixers, ploughshare mixers and disc mixers.

The pH in step 1) is advantageously controlled between 6 and 14, preferably between 8 and 14, more preferably between 10 and 14, even more preferably between 12 and 14, and even more preferably between 13 and 14.

The quantity of ATBS.Na in the aqueous solution $SA_2$ or the aqueous suspension $SA_2$ is advantageously between 10 and 90% by weight relative to the total weight of the aqueous solution or of the aqueous suspension $SA_2$, preferably 20 and 90%, preferably between 30 and 90% by weight, preferably between 50 and 90% by weight, preferably between 20 and 85% by weight, more preferably between 30 and 80% by weight.

**Step 2) of the method for producing the crystalline form of the ATBS sodium salt:**

The distillation of the aqueous solution or of the aqueous suspension $SA_2$ takes place at a pressure of 700 mbar or less. It generally takes place in a vacuum distillation device, which is typically an evaporator. It is therefore also referred to here as "vacuum distillation".

When the aqueous solution or the aqueous suspension SA2 is distilled, typically by passing it through an evaporator, crystals of ATBS.Na begin to form. Thus ATBS, the at least one sodium salt base, and crystalline solid particles of ATBS.Na coexist in the aqueous solution or the aqueous suspension $SA_2$.

The aqueous solution or an aqueous suspension $SA_2$ can be distilled using an evaporator. This may be a falling film evaporator, or a rising film evaporator, or a scraped thin film evaporator, or a short path evaporator, or a forced circulation evaporator, or a spiral tube evaporator, or a flash evaporator. It may also be a continuously stirred reactor. Preferably, distillation takes place in a scraped thin film evaporator, a short path evaporator or a forced circulation evaporator. Even more preferably, distillation takes place in a scraped thin film evaporator.

Generally, an evaporator is a device comprising an inlet for solution to be treated (aqueous solution or aqueous suspension $SA_2$), an outlet for discharging the distilled solvent (the water and any organic solvents) and an outlet for discharging the suspension $S_1$.

The residence time of the aqueous solution or of the aqueous suspension $SA_2$ in the distillation device (advantageously under vacuum), which is advantageously an evaporator, in other words the distillation time at a pressure of 700 mbar or less, is advantageously comprised between 1 second and 600 seconds, preferably between 3 seconds and 300 seconds, more preferably between 30 seconds and 100 seconds. The residence time corresponds to the time necessary to carry out step 2), i.e., the time required to prepare the suspension $S_1$ by distillation of the aqueous solution or of the aqueous suspension $SA_2$. In other words, when an evaporator is used, it is the residence time of the ATBS (and/or the crystalline form of its sodium salt) between the inlet and the outlet of the device. This residence time depends on the quantity of water (and any organic solvents), ATBS and sodium salt base present in the aqueous solution or the aqueous suspension $SA_2$. A person skilled in the art knows how to adapt this residence time in order to obtain ATBS.Na in the crystalline form depending on the quantity of the constituents of the aqueous solution or the aqueous suspension $SA_2$.

The distillation can be carried out in a vertical or horizontal evaporator. Preferably, it is carried out in a vertical evaporator.

The aqueous solution or the aqueous suspension $SA_2$ can circulate co-current or counter-current to the vapours generated by the evaporation. Preferably, it circulates counter-current to the vapours in the distillation device. In other words, the aqueous solution or the aqueous suspension $SA_2$ is preferably introduced into the distillation device, advantageously an evaporator, co-current or counter-current to the distilled solvent.

The aqueous solution or the aqueous suspension $SA_2$ may circulate in one or more evaporators in series before obtaining the suspension $S_1$. Preferably, it circulates in a single evaporator.

The pressure during distillation is advantageously between 1 and 700 mbar absolute (1 mbar = 100 Pa). It is preferably less than 700 mbar absolute, more preferably less than 600 mbar absolute, more preferably less than 500 mbar absolute, more preferably less than 400 mbar absolute, more preferably less than 300 mbar absolute, more preferably less than 200 mbar absolute, more preferably less than 100 mbar absolute and even more preferably less than 50 mbar absolute, and advantageously greater than 1 mbar absolute. The absolute pressure corresponds to the pressure relative to zero pressure (vacuum).

In general, the pressure during distillation is preferably comprised between 10 and 700 mbar, preferably between 20 and 700 mbar, preferably between 40 and 700 mbar more preferably between 50 and 600 mbar, more preferably between 50 and 500 mbar, more preferably between 50 and 400 mbar, more preferably between 50 and 300 mbar, more preferably between 100 and 700 mbar, more preferably between 200 and 700 mbar, more preferably between 500 and 700 mbar, more preferably between 40 and 100 mbar. In one particular embodiment, step 2) comprises a step 2') (optional) for helping the solvent to evaporate. Step 2') consists in increasing the temperature of the aqueous solution or of the aqueous suspension $SA_2$, in other words the distillation according to step 2') is carried out under heat.

In some embodiments, in step 2), the aqueous solution or the aqueous suspension $SA_2$ is heated, advantageously at a temperature of between 5°C and 95°C, preferably between more than 10°C and 60°C, more preferably between more than 20°C and 40°C.

The heating during distillation may be carried out by various technologies. Examples include, but are not limited to, heating with steam, with hot water, with electricity, by steam compression, or indeed by using a heat pump. Thus, the distillation device may be of the double-walled type, with a hot heat-transfer fluid circulating between the two walls.

The aqueous solution or the aqueous suspension $SA_2$ is advantageously heated to a temperature between more than 5°C and 95°C, preferably between more than 10°C and 60°C, more preferably between more than 20°C and 40°C.

When the aqueous solution or the aqueous suspension $SA_2$ is heated, the temperature is advantageously greater than the temperature of step 1).

The temperature of the aqueous solution or of the aqueous suspension $SA_2$ advantageously increases at a ramp of between 0.1 and 10°C/hour, preferably between 0.2 and 9°C/hour, more preferably between 0.3 and 8°C/hour, and even more preferably between 0.5 and 5°C/hour.

In some embodiments, the temperature of the aqueous solution or of the aqueous suspension $SA_2$ advantageously increases at a ramp of between 10 and 150°C/hour, preferably between 30 and 110°C/hour, more preferably between 50 and 100°C/hour, and even more preferably between 60 and 90°C/hour.

The increase in temperature may not be constant throughout the whole process. For example, the aqueous solution or the aqueous suspension $SA_2$ may be heated by 5°C per hour for the first three hours, and then heated at a speed of 10°C per hour until the final temperature is reached.

According to another particular embodiment of the invention, step 2) may comprise a step 2") (optional), after step 2'), or instead of step 2'), that helps to increase the productivity and the profitability of the method of the invention by accelerating the crystallization of the ATBS into the crystalline form of its sodium salt. Step 2") consists in decreasing the temperature of the aqueous solution or of the aqueous suspension $SA_2$.

The aqueous solution or the aqueous suspension $SA_2$ is advantageously cooled to a temperature of between 5 and less than 95°C, preferably between 10 and less than 60°C, more preferably between 20 and less than 40°C and even more preferably between 10 and 40°C.

In some embodiments, step 2) further comprises a cooling step.

The cooling step is advantageously carried out at a temperature of between 5°C and 95°C, preferably between more than 10°C and 60°C, more preferably between more than 10°C and 40°C.

In some embodiments, the temperature of the cooling step is decreased at a ramp of between 0.1 and 8°C/hour, preferably between 0.2 and 8°C/hour, more preferably between 0.3 and 8°C/hour, and even more preferably between 0.5 and 5°C/hour.

In some embodiments, the temperature of the cooling step is advantageously inferior to the temperature of heating of step 2) and/or step 1).

In some embodiments, the cooling step is carried out on the aqueous solution or the aqueous suspension $SA_2$ and/or the concentrated aqueous solution or the aqueous suspension $SA_2$ and/or the suspension $S_1$.

When the aqueous solution or the aqueous suspension $SA_2$ is cooled (step 2"), the temperature is advantageously less than the temperature of steps 2) and optionally 2').

According to a preferred embodiment, the temperature of step 2") is the same or less than the temperature of step 1).

In some embodiments, no organic solvent or aqueous solution is added in step 2'' for obtaining the crystals of ATBS.Na.

The temperature of the solution or of the aqueous suspension $SA_2$ advantageously decreases at a ramp of between 0.1 and 8°C/hour, preferably between 0.2 and 8°C/hour, more preferably between 0.3 and 8°C/hour, and even more preferably between 0.5 and 5°C/hour.

The decrease in temperature may not be constant throughout the whole process. For example, the aqueous solution or the aqueous suspension $SA_2$ may be cooled by 5°C per hour for the first three hours, and then cooled at a speed of 8°C per hour until the final temperature is reached.

While the aqueous solution or the aqueous suspension $SA_2$ is being cooled, crystals of ATBS.Na form and a suspension $S_1$ is obtained.

In a particular embodiment, previously obtained crystals of ATBS.Na can be added during this step in order to modify the formation of the suspension $S_1$. It is a crystallization seeding which makes it possible to better control of the crystallization temperature, the particle size of the crystals, the particle-size distribution, the purity of the end product and, possibly, the yield. The crystals of sodium salt of ATBS added in this way advantageously have an X-ray powder diffraction pattern comprising peaks at 11.7°; 12.2°; 13.2°; 13.5°; 15.6°; 16.8°; 17.8°; 18.5°; 19.1°; 20.6°; 21.4°; 23.3°; 25.1°; 25.8°; 26.9°; 29.1°; 29.5°; 31.0°; 33.0°; 33.6°; 34.4°; 35.2°; 35.9°; 37.1°; 38.4°; 39.6°; 41.1°; 42.9°; 45.1°; 46.0°; 47.2°; 47.6° degrees 2-theta (+/- 0.1°).

According to one particular embodiment of the invention, the solvent distilled in step 2) may be partially or totally recycled in order to form the aqueous solution or aqueous suspension $SA_2$ of step 1). In other words, the distilled solvent is advantageously at least partially recycled in the aqueous solution $SA_2$.

According to another particular embodiment of the invention, the distilled solvent may be partially or totally recycled, generally to wash the crystals of sodium salt of ATBS obtained after step 3) of solid-liquid separation, in an optional step 4), with or without a prior treatment step.

The obtained suspension $S_1$ advantageously comprises between 30 and 90% by weight of crystalline form of ATBS.Na, relative to the total weight of the suspension $S_1$, preferably between 50 and 90% by weight, more preferably between 30 and 80% by weight of ATBS.Na in the crystalline form, relative to the total weight of the suspension $S_1$, and preferably between 50 and 60% by weight.

During step 2), the pH is advantageously greater than 10, preferably greater than 11, more preferably greater than 12, and the pH is even more preferably between 13 and 14.

**Step 3) of the method for producing the crystalline form of the ATBS sodium salt:**
The crystals of sodium salt of ATBS contained in the suspension $S_1$ obtained at the end of step 2) are isolated in a solid-liquid separation step and are in the form of a composition $C_1$.

The solid-liquid separation step can be carried out using various technologies. Examples include, but are not limited to, the use of a centrifuge, a decanter, a filter press, an agitated filter, a belt filter, a disc filter or a rotary drum filter. The solid-liquid separation is preferably carried out using a centrifuge. The solid-liquid separation may also be carried out by gravitational settling.

Step 3) is advantageously carried out at a temperature of between -20 and 40°C, and preferably between -5 and 30°C.

After step 3) of solid-liquid separation, the crystals of sodium salt of ATBS are preferably not dried.

The isolated composition $C_1$ has a content of crystals of sodium salt of ATBS advantageously between 40 and 99%, preferably between 60 and 99% by weight and more preferably between 60 and 98% by weight and even more preferably between 80 and 99% by weight relative to the weight of the composition $C_1$. The remainder of the composition $C_1$ may be water and/or solubilized sodium salt of ATBS, and possibly sodium salt base introduced in step 1).

At the end of this step 3), the crystals are characterized as being crystals of ATBS.Na.

In one particular embodiment, all or part of the liquid phase obtained following the solid-liquid separation is used in the aqueous solution or aqueous suspension $SA_2$ of step 1).

During step 4), the pH is advantageously controlled between 6 and 14, preferably between 8 and 14, more preferably between 10 and 14, even more preferably between 12 and 14, and even more preferably between 13 and 14.

**Step 4) of the method for producing the crystalline form of the ATBS sodium salt:**
In an optional step 4), the composition $C_1$ containing the crystals of ATBS.Na obtained at the end of step 3) is washed using a washing solution.

The washing solution may be water, an aqueous solution of a sodium salt base (which may or may not be saturated), or a solution (which may or may not be saturated) of ATBS sodium salt (advantageously in the crystalline form of ATBS.Na), and it is preferably a saturated solution of a sodium salt of ATBS.

Examples of solutions of sodium salt base include a solution of sodium hydroxide, sodium carbonate, sodium bicarbonate or mixtures thereof.

The washing solution may comprise one or more organic solvents.

Advantageously, the washing solution does not comprise organic solvent.

As already indicated for step 1), the organic solvent is advantageously chosen from organic acids, amides, alcohols, ketones, ethers, esters, alkanes, halogenated hydrocarbon compounds, nitriles, or mixtures thereof. The organic solvent is preferably chosen from acrylonitrile, isopropanol, acetic acid or mixtures thereof. More preferably, the organic solvent is acrylonitrile.

In one particular embodiment, the composition $C_1$ obtained at the end of step 3) is washed by spraying washing

solution over said composition $C_1$.

In one particular embodiment, the composition $C_1$ obtained at the end of step 3) is washed by placing the composition $C_1$ in suspension in the washing solution.

The weight ratio of the aqueous washing solution to the composition $C_1$ obtained at the end of step 3) is advantageously between 0.05:1 and 10:1 and more preferably between 0.1:1 and 5:1.

This washing step is advantageously carried out at a temperature of between -5 and 40°C, and preferably between 0 and 30°C. A person skilled in the art knows how to adjust the temperature so as not to solubilize the crystals of ATBS.Na.

The crystals of ATBS.Na obtained at the end of this optional step 4) can be isolated from the washing solution by a solid-liquid separation step, in the form of a composition $C_2$.

The solid-liquid separation step can be carried out using various technologies. Examples include, but are not limited to, the use of a vertical or horizontal centrifuge, a decanter, a filter press, a belt filter, a disc filter, a push filter or a rotary drum filter. The solid-liquid separation may also be carried out by gravitational settling.

In one particular embodiment, all or part of the recovered washing solution may be used again in step 4), with or without a prior treatment step.

In one particular embodiment, all or part of the recovered washing solution may be used in the aqueous solution $SA_1$ and/or the aqueous solution or suspension $SA_2$ in step 1), with or without a prior treatment step.

The pH of the washing solution of step 5 is advantageously controlled between 6 and 14, and preferably between 8 and 14.

**Step 5) of the method for producing the crystalline form of the ATBS.Na:**

In an optional step 5), the composition $C_1$ obtained at the end of step 3) or the composition $C_2$ obtained at the end of step 4) is dried.

The drying step can be carried out using various technologies. Examples include, but are not limited to, the use of all convection, conduction or radiation drying technologies (fluidized bed dryer, through-bed dryer, drying by conveyor belt, microwave, heated agitated filter, high-frequency radiation, infrared radiation, spraying).

The drying operation may be carried out at atmospheric pressure or else under vacuum.

The drying step may be carried out discontinuously (batch drying) or continuously.

**Other steps of the method for producing the crystalline form of the ATBS.Na:**

During the production method, i.e., during steps 1) to 5), and regardless of the step, at least one polymerization inhibitor may be introduced in order to prevent the possible polymerization of the ATBS or its salt. This inhibitor may be chosen, in a non-limiting manner, from hydroquinone, paramethoxyphenol, phenothiazine, 2,2,6,6-tetramethyl(piperidin-1-yl)oxyl, 4-hydroxy-2,2,6,6-tetramethyl(piperidin-1-yl)oxyl, phenylene diamine derivatives, or mixtures thereof.

The inhibitor is preferably paramethoxyphenol or 4-hydroxy-2,2,6,6-tetramethyl(piperidin-1-yl)oxyl.

The quantity of inhibitor that is introduced relative to the quantity of ATBS introduced in step 1) is advantageously between 0.001% and 5% by weight, and more preferably between 0.01% and 1% by weight.

The inhibitor may be introduced during any one or more of the steps of the method. An additional quantity of it is preferably introduced during step 1). More preferably, the inhibitor is part of the aqueous solution $SA_1$ introduced in step 1).

The production method (steps 1) to 5)) may be carried out continuously or discontinuously (batch production).

**Composition of the water-soluble polymer**

The water-soluble polymer is obtained from the crystalline form of ATBS.Na, and advantageously from at least one other monomer which may be chosen from hydrophilic non-ionic monomers and/or hydrophilic anionic monomers and/or hydrophilic cationic monomers and/or hydrophilic zwitterionic monomers and/or hydrophobic monomers and mixtures thereof. It may be a polymer of several distinct monomers or a homopolymer.

Advantageously, the hydrophilic non-ionic monomer or monomers that can be used in the invention are chosen, in particular, from the group comprising water-soluble vinyl monomers such as acrylamide, methacrylamide, N-alkylacrylamides, N-alkylmethacrylamides, N,N-dialkyl acrylamides (e.g. N,N-dimethylacrylamide or N,N-diethylacrylamide), N,N-dialkylmethacrylamides, alkoxylated esters of acrylic acid, N-vinylpyrrolidone, N-methylol(meth)acrylamide, N-vinyl caprolactam, N-vinylformamide (NVF), N-vinyl acetamide, N-vinyl imidazole, N-vinyl succinimide, acryloyl morpholine (ACMO), glycidyl methacrylate, vinyl acetate, glyceryl methacrylate, diacetone acrylamide, methacrylic any hydride, acrylonitrile, maleic anydride, itaconamide, hydroxyalkyl (meth)acrylate, thioalkyl (meth)acrylate, isoprenol and its alkoxylated derivatives, hydroxyethyl (meth)acrylates and their alkoxylated derivatives, hydroxypropylacrylate and its alkoxylated derivatives, and mixtures thereof. Among non-ionic monomers, the alkyl groups are advantageously $C_1$-$C_5$,

and more advantageously $C_1$-$C_3$. They are preferably linear alkyls. Preferably, the hydrophilic non-ionic monomer is acrylamide.

The water-soluble polymer advantageously comprises between 0 and 99 mol% of hydrophilic non-ionic monomer(s), preferably between 40 and 95 mol%, and more preferably between 45 and 90 mol%.

Advantageously, apart from the ATBS.Na in crystalline form, the hydrophilic anionic monomer or monomers which can be used in the invention can be chosen from a large group. These monomers may have vinyl functions (advantageously acrylic, maleic, fumaric, malonic, itaconic, or allylic), and contain a carboxylate, phosphonate, phosphate, sulphate or sulphonate group, or another anionically charged group. Examples of suitable monomers include acrylic acid; methacrylic acid; dimethylacrylic acid; itaconic acid; $C_1$-$C_3$ hemiesters of itaconic acid; acryloyl chloride; crotonic acid; maleic acid; fumaric acid; 3-acrylamido-3-methylbutanoic acid; strong acid monomers with, for example, a sulfonic acid or phosphonic acid function, such as vinylsulfonic acid, vinylphosphonic acid, allylsulfonic acid, methallylsulfonic acid, 2-methylidenepropane-1,3-disulfonic acid, 2-sulfoethylmethacrylate, sulfopropylmethacrylate, sulfopropylacrylate, allylphosphonic acid, ethylene glycol methacrylate phosphate, 2-acrylamido-2-methylpropane sulfonic acid (ATBS), 2-acrylamido-2-methylpropane disulfonic acid, 3-allyloxy-2-hydroxypropane sulfonic acid, diethylallylphosphonate, carboxyethyl acrylate; water-soluble salts of these monomers such as their alkali metal salts (distinct from the ATBS.Na in crystalline form), alkaline-earth metal salts or ammonium salts; and mixtures thereof. Preferably, the hydrophilic anionic monomer or monomers is acrylic acid and/or its salts.

The water-soluble polymer advantageously comprises between 1 and 100 mol% of anionic hydrophilic monomer(s) (distinct from the crystalline form of ATBS.Na), preferably between 2 and 60 mol%, more preferably between 5 and 30 mol%, even more preferably between 5 and 20 mol%, these percentages including the monomer of crystalline form of ATBS.Na.

In one particular embodiment according to the invention, the hydrophilic anionic monomer or monomers, apart from ATBS.Na in the crystalline form, may be salified.

By salified, we mean the substitution of a proton of at least one acid function of the - $R^a$(=O)-OH type (with R representing P, S or C) of the anionic monomer by a metal or ammonium cation to form a salt of the -$R^a$(=O)-OX type (X being a metal cation or an organic cation). In other words, the non-salified form corresponds to the acid form of the monomer, for example $R^b$-C(=O)-OH in the case of the carboxylic acid function, while the salified form of the monomer corresponds to the $R^b$-C(=O)-$O^-$ $X^+$ form, $X^+$ corresponding to an alkaline cation or an organic cation. The salification of the acid functions of the branched water-soluble polymer can be partial or total. The salified form advantageously corresponds to the salts of alkali metals (Li, Na, K, etc.), alkaline-earth metals (Ca, Mg, etc.) or ammonium (for example the ammonium ion or a tertiary ammonium). The preferred salt is sodium salt.

The salification may take place before, during or after polymerization.

In a particular embodiment according to the invention, the water-soluble polymer advantageously comprises between 1 and 100 mol% of hydrophilic anionic monomer(s) in salified form, preferably between 20 and 100 mol%, more preferably between 50 and 100 mol% and even more preferably between 80 and 100 mol%. These percentages include the monomer in crystalline form of ATBS.Na according to the invention.

Advantageously, the hydrophilic cationic monomer or monomers that can be used in the invention are chosen from monomers derived from vinyl-type units (advantageously acrylamide, acrylic, allylic or maleic), these monomers having a phosphonium or quaternary ammonium function. Mention may be made, in particular and in non-limiting manner, diallyldialkyl ammonium salts such as diallyl dimethyl ammonium chloride (DADMAC); acidified or quaternized salts of dialkylaminoalkyl(meth)acrylamides, e.g. methacrylamido-propyl trimethyl ammonium chloride (MAPTAC), acrylamidopropyl trimethyl ammonium chloride (APTAC); acidified or quaternized salts of dialkylaminoalkyl acrylate, such as quaternized or salified dimethylaminoethyl acrylate (DMAEA); acidified or quaternized salts of dialkylaminoalkyl methacrylate, such as quaternized or salified dimethylaminoethyl methacrylate (DMAEMA); acidified or quaternized salts of N,N-dimethylallylamine; acidified or quaternized salts of diallylmethylamine; acidified or quaternized salts of diallylamine; vinylamine obtained by the hydrolysis (basic or acid) of an amide group -N($R_2$)-CO-$R_1$ with $R_1$ and $R_2$ being, independently, a hydrogen atom or an alkylated chain of 1 to 6 carbons, for example vinylamine obtained from the hydrolysis of vinylformamide; vinylamine obtained by Hofmann degradation; and mixtures thereof. Advantageously, the alkyl groups are $C_1$-$C_7$, preferably $C_1$-$C_3$, and can be linear, cyclic, saturated or unsaturated chains. Preferably quaternized dimethylaminoethyl acrylate.

A person skilled in the art knows how to prepare quaternized monomers, for example using a quaternizing agent of the R-X type, where R is an alkyl group and X is a halogen or sulfate.

The term "quaternizing agent" refers to a molecule capable of alkylating a tertiary amine.

The quaternizing agent may be chosen from dialkyl sulfates containing from 1 to 6 carbon atoms or alkyl halides containing from 1 to 6 carbon atoms. Preferably, the quaternizing agent is chosen from methyl chloride, benzyl chloride, dimethyl sulfate or diethyl sulfate.

In addition, the present invention also covers DADMAC, APTAC and MAPTAC monomers whose counterion is a sulfate, fluoride, bromide or iodide instead of chloride.

The water-soluble polymer advantageously comprises between 0 and 20 mol% hydrophilic cationic monomer(s), and preferably between 0 and 6 mol%.

Advantageously, the hydrophilic zwitterionic monomer or monomers may be a derivative of a vinyl-type unit (advantageously acrylamide, acrylic, allylic or maleic), this monomer having a quaternary amine or ammonium function and a carboxylic (or carboxylate), sulphonic (or sulphonate) or phosphoric (or phosphate) acid function. Mention may be made, in particular and in a non-limiting manner, of dimethylaminoethyl acrylate derivatives, such as 2-((2-(acryloyloxy) ethyl) dimethylammonio) dimethylammonio) ethane-1-sulphonate, 3-((2-(acryloyloxy)ethyl) dimethylammonio) propane-1-sulphonate, 4-((2-(acryloyloxy)ethyl) dimethylammonio) butane-1-sulphonate, [2-(acryloyloxy)ethyl] (dimethylammonio) acetate, dimethylaminoethyl methacrylate derivatives, such as 2-((2-(methacryloyloxy) ethyl) dimethylammonio) ethane-1-sulphonate, 3-((2-(methacryloyloxy) ethyl) dimethylammonio) propane-1-sulphonate, 4-((2-(methacryloyloxy) ethyl) dimethylammonio) butane-1-sulphonate, [2-(methacryloyloxy)ethyl] (dimethylammonio) acetate, dimethylamino propylacrylamide derivatives, such as 2-((3-acrylamidopropyl) dimethylammonio) ethane-1-sulphonate, 3-((3-acrylamidopropyl) dimethylammonio) propane-1-sulphonate, 4-((3-acrylamidopropyl) dimethylammonio) butane-1-sulphonate, [3-(acryloyloxy) propyl] (dimethylammonio) acetate, dimethylamino propyl methylacrylamide derivatives such as 2-((3-methacrylamidopropyl) dimethylammonio) ethane-1-sulphonate, 3-((3-methacrylamidopropyl) dimethylammonio) propane-1-sulphonate, 4-((3-methacrylamidopropyl) dimethylammonio) butane-1-sulphonate and [3-(methacryloyloxy)propyl] (dimethylammonio) acetate and mixtures thereof.

Other hydrophilic zwitterionic monomers can be used, in particular those described by the Applicant in document WO2021/123599.

The polymer advantageously comprises between 0 and 20 mol% hydrophilic zwitterionic monomer(s), more preferably between 0 and 10 mol%.

Hydrophobic monomers with a coefficient partition $K_{ow}$ greater than 1 can also be used in the preparation of the polymer according to the invention. They are preferably chosen from the following list: : (meth)acrylic acid esters with a (i) $C_4$-$C_{30}$ alkyl, or (ii) arylalkyl ($C_4$-$C_{30}$ alkyl, $C_4$-$C_{30}$ aryl), or (iii) propoxylated, or (iv) ethoxylated, or (v) ethoxylated and propoxylated chain; alkyl aryl sulfonates ($C_4$-$C_{30}$ alkyl, $C_4$-$C_{30}$ aryl) ; mono- or disubstituted (meth)acrylamide amides bearing a (i) $C_4$-$C_{30}$ alkyl, or (ii) arylalkyl ($C_4$-$C_{30}$ alkyl, $C_4$-$C_{30}$ aryl), or (iii) propoxylated, or (iv) ethoxylated, or (v) ethoxylated and propoxylated chain; anionic or cationic monomer derivatives of (meth)acrylamide or (meth)acrylic acid bearing a hydrophobic chain; vinylpyridine and mixtures thereof. The hydrophobic monomers may comprise halogen atoms, for example chlorine.

Among these hydrophobic monomers:

- alkyl groups are preferably $C_4$-$C_{20}$, more preferably $C_4$-$C_8$. The $C_6$-$C_{20}$ alkyls are preferably linear, while the $C_4$-$C_5$ alkyls are preferably branched,
- arylalkyl groups are preferably $C_7$-$C_{25}$, more preferably $C_7$-$C_{15}$,
- the ethoxylated chains advantageously comprise between 1 and 200 $-CH_2-CH_2-O-$groups, preferably between 6 and 100, more preferably between 10 and 40,
- the propoxylated chains advantageously comprise between 1 and 50 $-CH_2-CH_2-CH_2-O-$groups, more preferably between 1 and 20.

Preferred hydrophobic monomers belonging to these classes are, for example:

- n-hexyl (meth)acrylate, n-octyl (meth)acrylate, octyl (meth)acrylamide, lauryl (meth)acrylate, lauryl (meth)acrylamide, myristyl (meth)acrylate, myristyl (meth)acrylamide, pentadecyl (meth)acrylate, pentadecyl (meth)acrylamide, cetyl (meth)acrylate, cetyl (meth)acrylamide, oleyl (meth)acrylate, oleyl (meth)acrylamide, erucyl (meth)acrylate, erucyl (meth)acrylamide, N-tert-Butyl (meth)acrylamide, 2-ethylhexyl acrylate, $C_4$-$C_{22}$ itaconic acid hemiesters, acidified or quaternized salts of $C_4$-$C_{22}$ dialkylaminoalkyl (meth)acrylate, acidified or quaternized salts of $C_4$-$C_{22}$ dialkylaminoalkyl (meth)acrylamides, vinylpyridine, acrylamido undecanoic acid, and mixtures thereof,
- cationic allyl derivatives of formula (I) or (II):

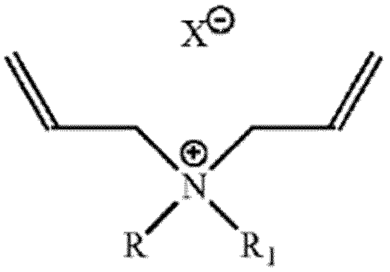

(I)

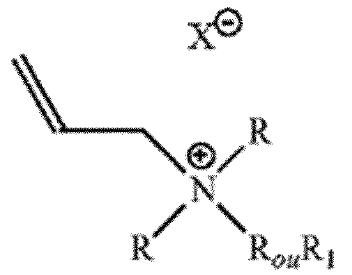

(II)

in which:

R: independently an alkyl chain containing 1 to 4 carbons;
$R_1$: an alkyl or arylalkyl chain containing 8 to 30 carbons;
X: a halide selected from the group consisting of bromides, chlorides, iodides, fluorides and any negatively charged counterion;
and, preferably, hydrophobic cationic derivatives of the (meth)acryloyl type corresponding to formula (III):

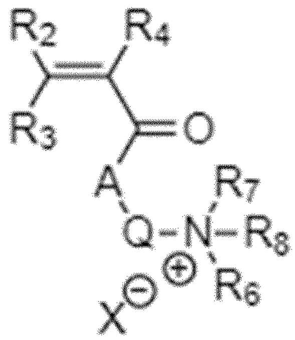

(III)

in which:

- A represents O or N-$R_5$ (preferably A represents N-$R_5$),
- $R_2$, $R_3$, $R_4$, $R_5$, $R_6$, $R_7$: independently hydrogen or an alkyl chain containing 1 to 4 carbons,
- Q: an alkyl chain containing 1 to 20 carbons,
- $R_8$: an alkyl or arylalkyl chain containing 8 to 30 carbons,
- X: a halide selected from the group consisting of bromides, chlorides, iodides, fluorides, and any negatively charged counterion.

The water-soluble polymer advantageously comprises less than 5 mol% hydrophobic monomers.

When the water-soluble polymer comprises hydrophobic monomers, they are present in an amount such that the polymer remains water-soluble.

Monomers having a fluorescent function can also be used in the invention. A monomer with a fluorescent function may be detected by any suitable method, for example by fluorometry with a fixed wavelength fluorometer. Generally, the monomer with a fluorescent function is detected at the excitation and emission maxima, which can be determined using a scanning fluorometer.

Monomers with a fluorescent function are chosen, for example, from the following monomers: sodium or potassium styrene sulfonate, styrene sulfonic acid, vinylimidazole and its derivatives, 9-vinyl anthracene and its derivatives, N-9-xanthenylacrylamide and its derivatives, allyl dibenzosuberenol and its derivatives, chinconicin and its derivatives, quininone and its derivatives, cinchoninone and its derivatives, N,N-dimethyl-N-[3-[N'-(4-m'thoxy naphthalimide)]]propyl-N-(2-hydroxy-3-allyloxy)propyl ammonium hydroxide and mixtures thereof.

Other fluorescent compounds can be used when functionalized with an allyl, vinyl or acrylic double bond, such as pyranine and its derivatives, coumarin and its derivatives, quinolaxine and its derivatives, pinacyanol and its derivatives, xanthydrol and its derivatives, dabsyl and its derivatives, 3-hydroxy-2-methylene-3-(1-naphthyl)propionic acid and its

derivatives, rhodamine and its derivatives, N-dibenzosuberylacrylamide and its derivatives, naphthalic derivatives, fluorescein and its derivatives, pyrene and its derivatives, carbostyril and its derivatives, pyrazoline and its derivatives and mixtures thereof.

In a preferred mode, the polymer does not comprise a monomer with a fluorescent function.

In one particular embodiment according to the invention, the water-soluble polymer may comprise at least one cyclic monomer with a hydrolyzable function. Advantageously, the or the cyclic monomers with a hydrolyzable function are chosen from cyclic ketene acetals, thionolactones and mixtures thereof.

The cyclic ketene acetal is advantageously chosen from: 2-methylene-1,3-dioxepane (MDO), 5,6-benzo-2-methylene-1,3-dioxepane (BMDO), 2-methylene-4-phenyl-1,3-dioxolane (MPDL), 2-methylene-1,3,6-trioxocane (MTC), and mixtures thereof. Preferably, it is 2-methylene-1,3-dioxepane (MDO).

The thionolactone is advantageously chosen from: dibenzo[c,e]oxepine(7H)-5-thione (DOT), ε-thionocaprolactone, 3,3-dimethyl-2,3-dihydro-5H-benzo[e][1,4]dioxepine-5-thione (DBT) and mixtures thereof. Preferably, it is 3,3-dimethyl-2,3-dihydro-5Hbenzo[e][1,4]dioxepine-5-thione.

In one particular embodiment according to the invention, the water-soluble polymer may comprise at least one group with an LCST.

According to the general knowledge of a person skilled in the art, a group with an LCST corresponds to a group whose water solubility, for a given concentration, is modified above a certain temperature and as a function of salinity. It is a group with a heating transition temperature that defines its lack of affinity with the solvent medium. The lack of affinity with the solvent results in opacification or loss of transparency, which may be due to precipitation, aggregation, gelation or viscosification of the medium. The minimum transition temperature is known as the LCST (Lower Critical Solution Temperature). For each concentration a group with an LCST, a heating transition temperature is observed. It is higher than the LCST, which is the minimum point on the curve. Below this temperature, the polymer is soluble in water; above this temperature, the polymer loses its solubility in water.

In one particular embodiment according to the invention, the water-soluble polymer may comprise at least one group with an UCST.

According to the general knowledge of a person skilled in the art, a group with a UCST corresponds to a group whose water solubility, for a given concentration, is modified below a certain temperature and as a function of salinity. It is a group with a cooling transition temperature that defines its lack of affinity with the solvent medium. The lack of affinity with the solvent results in opacification or loss of transparency, which may be due to precipitation, aggregation, gelation or viscosification of the medium. The maximum transition temperature is known as the UCST (Upper Critical Solution Temperature). For each concentration a group with a UCST, a cooling transition temperature is observed. It is lower than the UCST, which is the maximum point on the curve. Above this temperature, the polymer is soluble in water; below this temperature, the polymer loses its solubility in water.

The quantities of the different monomer(s) will be adjusted by a person skilled in the art in order not to exceed 100 mol% when preparing the water-soluble polymer.

**Water-soluble polymer**

The 2-acrylamido-2-methylpropane acid used to obtain the water-soluble polymer is advantageously at least 50 mol% in the crystalline form of the sodium salt before polymerization, preferably between 70 and 100 mol%. More preferably, 100 mol% of the ATBS is in the crystalline form of the sodium salt.

In a particular embodiment according to the invention, the water-soluble polymer is advantageously obtained from between 1 and 99 mol% of anionic hydrophilic monomer(s), preferably between 2 and 60 mol%, more preferably between 5 and 30 mol%, even more preferably between 5 and 20 mol%, these percentages including the monomer in the crystalline form of ATBS.Na.

In a particular embodiment according to the invention, the water-soluble polymer may comprise between 1 and 100 mol% of ATBS, preferably between 1 and 99 mol%, more preferably between 2 and 60 mol%, more preferably between 3 and 50 mol%, advantageously with at least 50 mol% of the ATBS used in the crystalline form of the sodium salt, preferably between 70 and 100 mol%, more preferably, 100 mol% of the ATBS that is used is in the crystalline form of the sodium salt.

In a particular embodiment according to the invention, the water-soluble polymer comprises between 1 and 99 mol% of non-ionic hydrophilic monomers, preferably between 40 and 95 mol%, more preferably between 45 and 90 mol%; and between 1 and 99 mol% of ATBS, preferably between 5 and 60 mol%, more preferably between 10 and 55 mol%, advantageously with at least 50 mol% of the ATBS used in the crystalline form of the sodium salt, preferably between 70 and 100 mol%. Even more preferably, 100 % of the ATBS that is used is in the crystalline form of the sodium salt.

In a preferred embodiment according to the invention, the water-soluble polymer is a polymer based on acrylamide and ATBS, with at least 50 mol% of the ATBS used in the crystalline form of the sodium salt. Preferably, the water-soluble polymer is a polymer consisting of acrylamide, acrylic acid and ATBS with at least 50 mol% of the ATBS used in the crystalline form of the sodium salt.

The polymer may be partially or totally post-hydrolyzed.

In a preferred embodiment according to the invention, the water-soluble polymer is a polymer of ATBS in the crystalline form of the sodium salt and a salt of acrylic acid, or a polymer of ATBS in the crystalline form of the sodium salt and a hydrolysable non-ionic monomer.

The hydrolyzable non-ionic monomer is preferably selected from acrylamide; methacrylamide; N-mono derivatives of acrylamide or methacrylamide; N,N derivatives of acrylamide or methacrylamide; and acrylic or methacrylic esters. Preferably, it is acrylamide.

According to the invention, the water-soluble polymer may have a linear, branched, crosslinked, star-shaped or comb-shaped structure. These structures can be obtained according to the general knowledge of the person skilled in the art, for example by selecting the initiator, the transfer agent, the polymerisation technique such as the controlled radical polymerisation called RAFT (Reversible Addition Chain Transfer), NMP (Nitroxide Mediated Polymerisation) or ATRP (Atom Radical Transfer Polymerisation), of the incorporation of structural monomers, of the concentration.

The water-soluble polymer may further by structured by a branching agent. A structured polymer is a non-linear polymer that has side chains such that, when dissolved in water, the polymer has a high degree of entanglement leading to very high low-gradient viscosities.

The branching agent is advantageously chosen from:

- structural agents, which can be chosen from the group comprising polyethylenically unsaturated monomers (having at least two unsaturated functions), such as vinyl functions, in particular allyl or acrylic functions, and we can cite for example methylene bis acrylamide (MBA), triallyamine, or tetraallylammonium chloride or 1,2 dihydroxyethylene bis-(N-acrylamide),
- monomers with at least two epoxy functions,
- monomers with at least one unsaturated and one epoxy function,
- macroinitiators such as polyperoxides, polyazoids and transfer agents such as polymercaptant polymers, and polyols,
- functionalized polysaccharides,
- water-soluble metal complexes composed of:

    * a metal with a valence greater than 3, such as, by way of example and non-limitation, aluminum, boron, zirconium or titanium, and
    * a ligand bearing a hydroxyl function.

The quantity of branching agent in the water-soluble polymer is advantageously less than 40,000 ppm relative to the total weight of the monomers of the water-soluble polymer, preferably less than 10,000 ppm, and more preferably less than 5,000 ppm.

In one particular embodiment, the quantity of branching agent is at least equal to 0.1 ppm relative to the total weight of the monomers of the water-soluble polymer, preferably at least 1 ppm, more preferably at least 10 ppm, more preferably at least 100 ppm and even more preferably at least 1 000 ppm.

When the water-soluble polymer comprises a branching agent, the polymer may remain soluble in water. A person skilled in the art knows how to adjust the quantity of branching agent and, possibly, the quantity of transfer agent needed to obtain this result.

In a preferred embodiment according to the invention, the water-soluble polymer comprising no branching agent.

In one particular embodiment, the water-soluble polymer may comprise a transfer agent.

The transfer agent is advantageously chosen from methanol; isopropyl alcohol; sodium hypophosphite; calcium hypophosphite; magnesium hypophosphite; potassium hypophosphite; ammonium hypophosphite; formic acid; sodium formate; calcium formate; magnesium formate; potassium formate; ammonium formate; 2-mercaptoethanol; 3-mercaptopropanol; dithiopropylene glycol; thioglycerol; thioglycolic acid; thiohydracrylic acid; thiolactic acid; thiomalic acid; cysteine; aminoethanethiol; thioglycolates; allyl phosphites; allyl mercaptans, such as n-dodecyl mercaptan; sodium methallysulfonate; calcium methallysulfonate; magnesium methallysulfonate; potassium methallysulfonate; ammonium methallysulfonate; alkyl phosphites such as trialkyl ($C_{12}$-$C_{15}$) phosphites, di-oleyl-hydrogen phosphites, dibutyl phosphite; dialkyldithiophosphates such as dioctyl phosphonate; tertiary nonylmercaptan; 2-ethylhexyl thioglycolate; n-octyl mercaptan; n-dodecyl mercaptan; tertiary-dodecyl mercaptan; iso-octylthioglycolate; 2-ethylhexyl thioglycolate; 2-ethylhexyl mercaptoacetate; polythiols; and mixtures thereof. Preferably sodium hypophosphite or sodium formate.

The quantity of transfer agent in the water-soluble polymer is advantageously between 0 and 100,000 ppm relative to the total weight of the monomers of the polymer, preferably between 0 and 10,000 ppm, more preferably between 0 and 1,000 ppm, and even more preferably between 0 and 100 ppm. When it is present, the transfer agent represents at least 0.1 ppm relative to the total weight of the monomers of the polymer, and preferably at least 1 ppm.

In one particular embodiment according to the invention, the water-soluble polymer comprises no transfer agent.

Generally speaking, water-soluble the polymer does not require the development of any particular polymerization method. Indeed, it may be obtained using any of the polymerization techniques that are well known to a person skilled in the art. These include solution polymerization; gel polymerization; precipitation polymerization; emulsion polymerization (aqueous or inverse); suspension polymerization; reactive extrusion polymerization; water-in-water polymerization; or micellar polymerization.

The polymerization is generally radical polymerization, preferably by inverse emulsion polymerization or gel polymerization. Radical polymerization includes free radical polymerization using UV, azo, redox or thermal initiators, as well as controlled radical polymerization (CRP) or matrix polymerization techniques.

Controlled radical polymerization techniques include, but are not limited to, techniques such as Iodine Transfer Polymerization (ITP), Nitroxide Mediated Polymerization (NMP), Atom Transfer Radical Polymerization (ATRP), Reversible Addition Fragmentation chain Transfer (RAFT) Polymerization, which includes MADIX (MAcromolecular Design by Interchange of Xanthates) technology, various variations of Organometallic Mediated Radical Polymerization (OMRP), and OrganoHeteroatom-mediated Radical Polymerization (OHRP).

As already indicated, the water-soluble polymer may be post-hydrolyzed. Post-hydrolysis is the hydrolysis reaction of the polymer after it has been formed by polymerization of the monomer(s). This step consists in reacting hydrolysable functional groups of monomers, advantageously non-ionic functional groups, more advantageously amide or ester functional groups, with a hydrolysis agent. This hydrolysis agent may be an enzyme, an ion-exchange resin, or a Brønsted acid metal (for example a hydrohalogenic acid) or a Brønsted base (for example an alkali hydroxide or an alkaline-earth hydroxide). Preferably, the hydrolysis agent is a Brønsted base. During this step of post-hydrolyzing the water-soluble polymer, the number of carboxylic acid functions increases. Indeed, the reaction between the base and the amide or ester functions present in the water-soluble polymer produces carboxylate groups.

The water-soluble polymer may be in liquid, gel or solid form when its preparation includes a drying step such as spray drying, drum drying, radiation drying such as microwave drying, or drying in a fluidized bed.

The water-soluble polymer advantageously has a weight-average molecular weight of at least 0.5 million g/mol, preferably between 0.5 and 40 million g/mol, more preferably between 5 and 30 million g/mol. Molecular weight is defined as weight-average molecular weight.

The weight-average molecular weight is determined by the intrinsic viscosity of the polymer. The intrinsic viscosity can be measured by methods known to a person skilled in the art and can be calculated from the reduced viscosity values for different polymer concentrations by a graphical method consisting in plotting the reduced viscosity values (y-axis) against the concentration (x-axis) and extrapolating the curve to zero concentration. The intrinsic viscosity value is plotted on the y-axis or using the least-squares method. The molecular weight can then be determined using the Mark-Houwink equation:

$$[\eta] = K\,M^{\alpha}$$

where $[\eta]$ represents the intrinsic viscosity of the polymer as determined by the solution viscosity method.
K represents an empirical constant.
M represents the molecular weight of the polymer.
$\alpha$ represents the Mark-Houwink coefficient.
K and $\alpha$ depend on the particular polymer-solvent system.

**Fracturing fluid**

The present invention relates to a fracturing fluid comprising an aqueous phase, at least one proppant and at least one water-soluble polymer of ATBS,
the ATBS being, before polymerization, in the crystalline form of ATBS.Na described above.

The aqueous phase is advantageously chosen from sea water, brine and fresh water, and is advantageously a brine.

Brine is a solution comprising water and organic or inorganic salts. The salts may include monovalent salts, divalent salts, trivalent salts and mixtures thereof. Advantageously, the brine comprises at least 1,000 mg/L of salts, preferably at least 5,000 mg/L, more preferably at least 10,000 mg/L, even more preferably at least 50,000 mg/L and even more preferably the brine is saturated with salts.

The proppant may be chosen from a non-restrictive list comprising sand, ceramics, bauxite, glass beads and resin-impregnated sand.

Advantageously, the quantity of proppant in the fracturing fluid is between 0.5 and 40% by weight relative to the total weight of the fracturing fluid, preferably between 1 and 25%, and more preferably between 1.5 and 20%.

Advantageously, the fracturing fluid comprises between 0.001% and 1% by weight of water-soluble polymer

obtained from the crystalline form of ATBS.Na relative to the total weight of the fracturing fluid, and preferably between 0.002% and 0.2%.

The fracturing fluid may comprise other compounds known to a person skilled in the art, such as those cited in document SPE 152596, for example:

- Clay anti-swelling agents such as potassium chloride or choline chloride, and/or
- Biocides for preventing the development of bacteria, in particular sulphate-reducing bacteria, which can form viscous masses reducing the passage surfaces. Examples include glutaraldehyde, which is the most used, or indeed formaldehyde or the isothiazolinones, and/or
- Oxygen reducers such as ammonium bisulphite for preventing the destruction of the other components by oxidation and corrosion of the injection tubes, and/or
- Anti-corrosion additives for protecting the tubes from oxidation by residual quantities of oxygen, with N,N dimethylformamide being preferred, and/or
- Lubricants such as oil distillates, and/or
- Iron chelating agents such as citric acid, EDTA (ethylenediaminetetraacetic acid), phosphonates, and/or
- Antiscaling agents such as phosphates, phosphonates, polyacrylates or ethylene glycol.

Before being used in the fracturing fluid, the water-soluble polymer according to the invention may be in various solid or liquid forms. Preferably, it is in the form of powder, a water-in-oil inverse emulsion, an aqueous multiphase particulate suspension, or an oily multiphase particulate suspension.

**Method for preparing a fracturing fluid**

The present invention also relates to a method for preparing a fracturing fluid by adding, to water or a brine, at least one water-soluble polymer of the crystalline form of ATBS.Na (described above), and in which the water-soluble polymer is, before the formation of the fracturing fluid:

- either in the form of powder;
- or in the form of a water-in-oil inverse emulsion;
- or in the form of an aqueous or oily multiphase particulate suspension.

The method for preparing a fracturing fluid according to the invention preferably comprises a step of adding at least one proppant to said fluid as previously described.

When the water-soluble polymer added to the fracturing fluid is, before the formation of the fracturing fluid, in the form of powder, the average size of the polymer particles is advantageously less than 1.5 millimetres, preferably less than 850 micrometres, and more preferably less than 200 micrometres. The average size of the particles of water-soluble polymer is advantageously greater than 5 $\mu$m.

The average size of the particles of water-soluble polymer is the average size of the largest dimension, for example the diameter in the case of spherical particles. It is advantageously measured using a laser measuring device using conventional techniques that are part of the knowledge of a person skilled in the art. For example, a Malvern Mastersizer, the MS2000, for example, could be used for this purpose. An apparatus of this type can be used to measure, by laser diffraction, the particle-size distribution of particles in a liquid medium or in solid form.

When the water-soluble polymer according to the invention is in solid form, it can be partially or totally dissolved in water using a polymer preparation unit such as the Polymer Slicing Unit (PSU) disclosed in EP 2 203 245.

When the water-soluble polymer added to the fracturing fluid is, before the formation of the fracturing fluid, in the form of a water-in-oil inverse emulsion, the concentration of water-soluble polymer in the emulsion is preferably between 5 and 60% by weight and more preferably between 15 and 40% by weight relative to the weight of the emulsion.

In a preferred embodiment according to the invention, the water-in-oil inverse emulsion may comprise between 0.01% and 70% by weight of an organic and/or inorganic salt relative to the weight of the emulsion, and preferably between 5 and 20%. The salts may be chosen from a non-restrictive list of sodium chloride, sodium sulphate, sodium bromide, ammonium sulphate, ammonium chloride, lithium chloride, lithium bromide, potassium chloride, potassium bromide, magnesium sulphate, aluminium sulphate and mixtures thereof. The preferred salts are ammonium chloride and the ammonium sulphate.

When the water-soluble polymer added to the fracturing fluid is, before the formation of the fracturing fluid, in the form of an aqueous multiphase particulate suspension, said suspension preferably comprises:

- 15 to 60% by weight of at least one water-soluble polymer in the form of solid particles with an average size of between 5 and 500 $\mu$m;

- 15 to 45% by weight of at least one alkali metal salt and/or at least one alkaline-earth metal salt;
- at least one viscosifying agent other than the water-soluble polymer;
- at least 10% by weight of water; and

said suspension having a Brookfield viscosity of between 500 and 20,000 cps at a temperature of 20°C; and said suspension having a density of between 1.1 and 2 $kg.L^{-1}$.

When the water-soluble polymer added to the fracturing fluid is, before the formation of the fracturing fluid, in the form of an oily multiphase particulate suspension, said suspension preferably comprises:

- 15 to 60% by weight of at least one water-soluble polymer in the form of solid particles with an average size of between 5 and 500 μm;
- at least one viscosifying agent other than the water-soluble polymer;
- at least 10% by weight of oil; and

said suspension having a Brookfield viscosity of between 500 and 20,000 cps at a temperature of 20°C; and said suspension having a density of between 0.6 and 1.4 $kg.L^{-1}$.

Brookfield viscosity is measured with a Brookfield apparatus, fitted with an LV module, the module being able to rotate at a speed of 30 rpm, for example, the measurement being advantageously carried out at 20°C. The density is measured at 20°C, at a pressure of 1 atm, i.e., 101,325 Pa.

**Method for the hydraulic fracturing of an unconventional underground oil or gas reservoir**

The present invention also relates to a method for the hydraulic fracturing of an unconventional underground oil or gas reservoir that comprises preparing a fracturing fluid as previously described, and injecting said fracturing fluid into the underground reservoir.

Injection is carried out under pressure in order to create fractures distributed along the entire length of the production well.

Optionally, before, during or after the creation of the fractures, at least one oxidizing compound and/or at least one surfactant compound is injected into the reservoir.

Injecting a surfactant compound helps eliminate the viscosity generated by the polymer by inhibiting hydrophobic interchain interactions, while injecting the oxidising compound destroys the polymer. In both cases, injection allows a fluid viscosity close to that of water to be re-established.

Oxidizing compounds include bleach (an aqueous solution of a hypochlorite salt), hydrogen peroxide, ozone, chloramines, persulphates, permanganates and perchlorates.

The chemical nature of the surfactant compound(s) is not critical. They can be anionic, non-ionic, amphoteric, zwitterionic and/or cationic. The surface-active compound(s) of the invention preferably carry anionic charges.

Preferably, the surfactant compounds used are chosen from anionic surfactants and their zwitterions chosen from the group comprising derivatives of alkylsulphates, alkyl ether sulphates, arylalkylsulphates, arylalkylether sulphates, alkylsulphonates, alkyl ether sulphonates, arylalkylsulphonates, arylalkylether sulphonates, alkylphosphates, alkyletherphosphates, arylalkylphosphates, arylalkyletherphosphates, alkylphosphonates, alkyletherphosphonates, arylalkylphosphonates, arylalkyletherphosphonates, alkylcarboxylates, alkylethercarboxylates, arylalkylcarboxylates, arylalkylethercarboxylates, polyalkyl ethers, arylalkyl polyethers, etc.

An alkyl chain is defined as a chain of 6 to 24 carbons, branched or unbranched, with or without several units, which may optionally include one or more heteroatoms (O, N, S). An arylalkyl chain is defined as a chain of 6 to 24 carbons, branched or unbranched, comprising one or more aromatic rings and possibly comprising one or more heteroatoms (O, N, S).

The surfactant compounds most commonly used, for reasons of cost, stability and availability, are of the sulphonate or sulphate type, in the form of alkali metal or ammonium salts.

**Method for reducing the friction of a fracturing fluid in an operation for the hydraulic fracturing of an unconventional underground oil or gas reservoir**

The present invention also relates to a method for reducing the friction of a fracturing fluid in an operation for the hydraulic fracturing of an unconventional underground oil or gas reservoir that comprises preparing a fracturing fluid as previously described, and injecting said fracturing fluid into the underground reservoir.

Friction reduction reduces or eliminates losses (pressure) due to friction during injection of the fracturing fluid.

The invention and the resulting advantages will become apparent from the following embodiments.

**Description of the Figures**

Figure 1 shows the proton NMR spectrum of ATBS needle-shape crystals obtained according to Example 1.

Figure 2 shows the proton NMR spectrum of ATBS.Na crystals obtained according to Example 2a.

Figure 3 shows the X-ray diffraction pattern of the ATBS crystals obtained according to Example 1.

Figure 4 shows the X-ray diffraction pattern of the ATBS.Na crystals obtained according to Example 2a.

Figure 5 shows the Fourier-transform infrared spectrum of the ATBS crystals obtained in Example 1.

Figure 6 shows the Fourier-transform infrared spectrum of the ATBS.Na crystals obtained in Example 2a.

Figure 7 shows the thermogram of the ATBS crystals obtained according to Example 1.

Figure 8 shows the thermogram of the ATBS.Na crystals obtained according to Example 2a.

Figure 9 shows the percentage reduction in friction as a function of time for post-hydrolysed polymers.

Figure 10 shows the percentage reduction in friction as a function of time for terpolymers.

Figure 11 shows the percentage reduction in friction as a function of time for homopolymers.

Figure 12 shows the percentage reduction in friction as a function of time for copolymers.

Figure 13 shows an optical microscope view of the ATBS needle-shape crystals obtained according to example 1.

Figure 14 shows an optical microscope view of the ATBS.Na crystals obtained according to example 2a.

Figure 15 shows an optical microscope view of the ATBS.Na crystals obtained according to example 2b.

Figure 16 shows an optical microscope view of the ATBS.Na crystals obtained according to example 2c.

Figure 17 shows a photo of the ATBS.Na product obtained in solution according to comparative example 2b.

Figure 18 shows an optical microscope view of the ATBS.Na crystals obtained according to comparative example 2c.

Figure 19 shows an optical microscope view of the ATBS.Na crystals obtained according to comparative example 2d.

Figure 20 shows an optical microscope view of the ATBS.Na crystals obtained according to comparative example 2e.

## EXAMPLES

### Example 1: Synthesis of the 2-acrylamido-2-methylpropanesulphonic acid (ATBS) ($A_H$)

1522 g of acrylonitrile containing 0.4% by weight of water are added to a stirred, double-jacketed 2000 ml reactor, the mixture is stirred for 1 h and cooled by the double jacket of the reactor, which keeps the temperature of the sulphonating mixture at -20°C, and then 180 g of fuming sulphuric acid with a titre of 104% $H_2SO_4$ (18% oleum) are added.

97 g of isobutylene are added to the previous sulphonating mixture at a rate of 1.6 g/min.

The temperature of the mixture is controlled at 45°C when the isobutylene is added. The particles of the 2-acrylamido-2-methylpropanesulphonic acid precipitate out of the mixture and the solids content is approximately 20% by weight. The reaction mixture is filtered through a Büchner funnel and dried under vacuum at 50°C. The solid obtained is 2-acrylamido-2-methylpropanesulphonic acid (ATBS $\mathbf{A_H}$) in the form of a very fine white powder.

Optical microscope observation (Figure 13) shows that the crystals of ATBS $\mathbf{A_H}$ have a needle-shape morphology.

**Example 2a: Formation of the crystalline form of the 2-acrylamido-2-methylpropanesulphonic acid sodium salt (ATBS.Na $\mathbf{A_{Na}}$2a) (invention)**

439 g of a 22% (by weight in water) sodium hydroxide solution are added to a stirred, double-jacketed 1000 ml reactor. 452 g of ATBS $\mathbf{A_H}$ of example 1 are added to the previous mixture.
The mixture is stirred for 30 min, at 10°C, to form an aqueous solution $SA_2$.
The aqueous solution $SA_2$ is heated to a temperature of 40°C under vacuum of 50 mbar, for 20 min, then the temperature is maintained for 30 min under a vacuum of 50 mbar and cooled to a temperature of 10°C. The cooling time between 40°C and 10°C is 6 h. A suspension $S_1$ of crystals of the ATBS.Na is obtained. The suspension $S_1$ is filtered on a Robatel vertical centrifuge. A solid of composition $C_1$ is obtained, containing 80% by weight of crystals of the ATBS.Na $\mathbf{A_{Na}}$**2a.**
Optical microscope observation (Figure 14) shows that the crystals $\mathbf{A_{Na}}$**2a** have a columnar and platelet morphology.

**Example 2b: Formation of the crystalline form** of **the ATBS sodium salt (ATBS.Na $\mathbf{A_{Na}}$2b)**

The crystals of ATBS.Na $\mathbf{A_{Na}}$**2b** are prepared according to the procedure described in Example 2a except that $SA_2$ is distilled under 700 mbar.
Optical microscope observations (Figure 15) show that the crystals $\mathbf{A_{Na}}$**2b** obtained in these conditions are identical to the crystals of ATBS.Na $\mathbf{A_{Na}}$**2a** prepared in example 2a.

**Example 2c: Formation of the crystalline form of the ATBS sodium salt (ATBS.Na $\mathbf{A_{Na}}$2c)**

The crystals of ATBS.Na $\mathbf{A_{Na}}$**2c** are prepared according to the procedure described in Example 2a except that the cooling time is reduced to 3h45.
Optical microscope observations (Figure 16) show that show that the crystals obtained in these conditions are identical to the crystals of ATBS.Na $\mathbf{A_{Na}}$**2a.**

**Comparative example 2a: Preparation of crystals of ATBS.Na under atmospheric pressure (1 bar) (CE- $\mathbf{A_{Na}}$2a) (not obtained)**

The reaction is carried out according to the procedure described in Example 2a except that $SA_2$ is distilled under atmospheric pressure.
At the end of the cooling step, the aqueous solution $SA_2$ does not allow the formation of a suspension S1, and no filtration or centrifuging operation can be carried out to isolate crystals of ATBS sodium salt.

**Comparative example 2b: Preparation of crystals of ATBS sodium salt (CE- $\mathbf{A_{Na}}$2b) (not obtained)**

The reaction was carried out according to the conditions described in example 27 of patent application US6331647.
124 g of sodium hydroxide and 0.13 g of hydroquinone monomethyl ether are added to a stirred, double-jacketed 5 000 ml reactor with 400 g of water. The medium is stirred until all the sodium hydroxide is dissolved.
632 g of ATBS $\mathbf{A_H}$ are added to the previous mixture. The mixture is stirred for 30 min, at 10°C, to form an aqueous solution of sodium salt of 2-acrylamido-2-methylpropanesulfonate.
The aqueous solution obtained is filtered in a 3 000 ml reactor equipped for distillation and containing an air purge tube. The content is heated and stirred while air is blown belon the surface at 0.5 cubic feet per h. The content is heated to 50°C while under a vacuum of 933 mbar (~700 millimeters of mercury). As the water is removed, a yellowish honeylike product forms. The product is then transfer to a Robatel vertical centrifuge, but no solid was recovered.
No optical microscope observation was possible as no solid was obtained (figure 17).

**Comparative example 2c: Preparation of crystals of ATBS sodium salt (CE- $\mathbf{A_{Na}}$2c) (not obtained)**

The reaction was carried out according to the conditions described in example 3 of patent application WO2013079507.
100 g of an ATBS.Na solution (16.77% by weight) is obtained according to example 1 of WO2013079507.

50 g of solvent (mixture of acrylonitrile and methanol) are removed from the ATBS.Na solution at room temperature under reduced pressure (less than 700 mbar) while introducing air into the ATBS.Na solution. A solid of ATBS.Na **CE-** $\mathbf{A_{Na}}$**2c** is formed and is filtered and washed with acrylonitrile/methanol and then dried at 50°C overnight.

Optical microscope observation (Figure 18) shows that the dried solid of ATBS.Na CE-$\mathbf{A_{Na}}$**2c** does not correspond to the crystals of ATBS.Na according to the invention.

**Comparative example 2d: Preparation of ATBS.Na CE-$\mathbf{A_{Na}}$2d (not according to the invention)**

The reaction is carried out according to the procedure described in Example 2a except that $SA_2$ is distilled under 720 mbar.

A solid of composition C1 is obtained, containing 80% by weight of crystals of the ATBS.Na **CE-** $\mathbf{AN_a}$**2d.**

Optical microscope observation (Figure 19) shows that the crystals of ATBS.Na **CE-**$\mathbf{A_{Na}}$**2c** does not correspond to the crystals of ATBS.Na according to the invention.

**Comparative example 2e: Preparation of ATBS.Na CE-$\mathbf{A_{Na}}$2e (not according to the invention)**

The reaction is carried out according to the procedure described in Example 2a except that the cooling time is 3h20.

A solid of composition $C_1$ is obtained, containing 80% by weight of crystals of the ATBS.Na **CE-**$\mathbf{A_{Na}}$**2e.**

Optical microscope observation (Figure 20) shows that the crystals of ATBS.Na **CE-**$\mathbf{A_{Na}}$**2e** does not correspond to the crystals of ATBS.Na according to the invention.

**Example 3: NMR analysis of the products of ATBS $\mathbf{A_H}$ and ATBS.Na $\mathbf{A_{Na}}$2a from examples 1 and 2a**

ATBS $\mathbf{A_H}$ and ATBS.Na $\mathbf{A_{Na}}$**2a** are analysed by proton nuclear magnetic resonance (NMR).

The samples are dissolved in $D_2O$. The NMR machine is a Bruker model with a frequency of 400 MHz and is fitted with a 5 mm BBO BB-$^1$H.

The two proton spectra (Figures 1 and 2) are similar and the peak assignments are consistent with the molecular structure of ATBS or the sodium salt.

**Example 4: Analysis by X-ray diffraction of products of ATBS $\mathbf{A_H}$ and ATBS.Na $\mathbf{A_{Na}}$2a from examples 1 and 2a**

ATBS $\mathbf{A_H}$ and crystals of ATBS.Na $\mathbf{A_{Na}}$**2a** are ground beforehand to form powders to be analysed by X-ray diffraction over an angular range of 10 to 90°. The equipment used is a Rigaku MiniFlex II diffractometer equipped with a copper source.

Crystals of ATBS.Na $\mathbf{A_{Na}}$**2a** (Figure 4) present an X-ray diffraction pattern with the following characteristic peaks: 11.7°; 12.2°; 13.2°; 13.5°; 15.6°; 16.8°; 17.8°; 18.5°; 19.1°; 20.6°; 21.4°; 23.3°; 25.1°; 25.8°; 26.9°; 29.1°; 29.5°; 31.0°; 33.0°; 33.6°; 34.4°; 35.2°; 35.9°; 37.1°; 38.4°; 39.6°; 41.1°; 42.9°; 45.1°; 46.0°; 47.2°; 47.6° 2-theta angles (+/- 0.1°).

The X-ray diffraction pattern of the ATBS $\mathbf{A_H}$ (Figure 3) does not have the same peaks.

**Example 5: Fourier-transform infrared measurement of ATBS $\mathbf{A_H}$ and ATBS.Na $\mathbf{A_{Na}}$2a**

The equipment used for the Fourier transform infrared measurement is the Perkin Elmer Spectrum 100 fitted with a single reflection ATR polarization accessory, with an accuracy of 8 $cm^{-1}$.

ATBS $\mathbf{A_H}$ and crystals of **ATBS.Na** $\mathbf{A_{Na}}$**2a** are sieved to 100 μm. The particles remaining on the sieve are dried and placed in an oven at 60°C for at least 4 h.

A few hundred milligrams of solid are placed on the diamond of the ATR accessory and pressure is applied manually using the accessory.

The following bands (figure 6) are characteristic of the crystalline form of the ATBS.Na $\mathbf{A_{Na}}$**2a:** 3576$cm^{-1}$, 3485 $cm^{-1}$, 3310 $cm^{-1}$, 3079 $cm^{-1}$, 2975 $cm^{-1}$, 1658 $cm^{-1}$, 1629 $cm^{-1}$, 1543 $cm^{-1}$, 1403 $cm^{-1}$, 1321 $cm^{-1}$, 1301 $cm^{-1}$, 1205 $cm^{-1}$, 1187 $cm^{-1}$, 1163 $cm^{-1}$, 1046 $cm^{-1}$, 980 $cm^{-1}$, 629 $cm^{-1}$.

The infrared spectrum of ATBS $\mathbf{A_H}$ (figure 5) does not have the same peaks.

**Example 6: Differential Scanning Calorimetry (DSC) of ATBS $\mathbf{A_H}$ and ATBS.Na $\mathbf{A_{Na}}$2a products from Examples 1 and 2a**

The equipment used is a Mettler DSC 3.

ATBS $\mathbf{A_H}$ and crystals of ATBS.Na $\mathbf{A_{Na}}$**2a** are analysed with a heating ramp of 10°C/min under a flow of nitrogen.

The initial temperature is 30°C, and the product is heated to 350°C.

The thermogram of ATBS $\mathbf{A_H}$ (figure 7) shows a thermal effect at a temperature of 195.15°C, which is generally considered to be the melting/degradation point of ATBS, followed by two exothermic degradation phenomena at 212.8°C and 288.4°C.

The thermogram of the crystals of ATBS.Na $\mathbf{A_{Na}2a}$ (figure 8) shows 4 thermal phenomena at 49.8°C; 144.8°C; 169.8°C; and 254.3°C.

**Example 7: Polymers synthesis P1, P3, P5 and P7 according to the invention and comparative polymers P2 (CE), P4 (CE), P6 (CE) and P8 (CE)**

**Example 7a : Post-hydrolysed polymers of ATBS/acrylamide (AM) P1 and P2/P2c-e (CE)**

*Synthesis of polymer 1* ***P1*** *(according to the invention)*

761.9 g of deionised water, 574.2 g of acrylamide (50% solution by weight in water), 11.7 g of urea and 103.2 g of crystals of ATBS.Na $\mathbf{A_{Na}2a}$ are added to a 2000 mL beaker.

The resulting solution is cooled to between 0 and 5°C and transferred to an adiabatic polymerisation reactor. Nitrogen is bubbled for 30 minutes to eliminate any trace of dissolved oxygen.

The following are then added to the reactor:

- 0.45 g of 2,2'-azobisisobutyronitrile,
- 1.5 mL of a 5 g/L solution of 2,2'-azobis[2-(2-imidazolin-2-yl)propane] dihydrochloride,
- 1.5 mL of a 1 g/L solution of sodium hypophosphite,
- 2.25 ml of a 1 g/L solution of ter-butyl hydroperoxide,
- 3.0 ml of a 1 g/L solution of ammonium sulphate and iron(II) hexahydrate (Mohr's salt).

After a few minutes, the nitrogen inlet is shut off and the reactor is closed. The polymerisation reaction runs for 1 to 5 hours until a temperature peak is reached. The gel obtained is chopped into particles between 1 and 6 mm in size.

*Post-hydrolysis of acrylamide:* 500.0 g of previously chopped gel is then mixed with 22.5 g of 50% sodium hydroxide solution. The mixture is heated and maintained at a temperature of 90°C for 90 minutes.

The gel is then dried and ground to obtain the polymer **P1** in powder form.

*Synthesis of comparative polymers* ***P2*** *and* ***P2c*** *to* ***P2e*** *(CE)*

The polymer 2 (CE) is obtained according to the protocol described for **P1** replacing ATBS.Na $\mathbf{A_{Na}2a}$ with 93.1 g of ATBS $\mathbf{A_H}$ and 36 g of sodium hydroxide at 50% concentration by weight in water.

The polymers **P2c** to **P2e** (CE) are prepared according to the protocol described for **P1** replacing ATBS.Na $\mathbf{A_{Na}2a}$ with respectively **CE-ANa2c, CE-ANa2d** and **CE-ANa2e.**

**Example 7b: Terpolymers of acrylic acid (AA)/ATBS/AM P3 (according to the invention) and comparative polymers P4/P4c-e (CE)**

Polymer 3 **P3** is prepared according to the protocol described for **P1** using 1022 g of deionised water, 558.7 g of acrylamide in 50% solution, 89 g of 50% sodium hydroxide solution, 80 g of glacial acrylic acid, 15.3 g of urea and 125 g of ATBS.Na $\mathbf{A_{Na}2a}$**.**

The comparative polymer 4 **P4** (CE) is obtained according to the protocol described for **P3** replacing ATBS.Na $\mathbf{A_{Na}2a}$ with 93.1 g of ATBS $\mathbf{A_H}$ and 36 g of sodium hydroxide at 50% concentration by weight in water.

The comparative polymers **P4c** to **P4e** (CE) are prepared according to the protocol described for **P3** replacing ATBS.Na $\mathbf{A_{Na}2a}$ with respectively **CE-ANa2c, CE-ANa2d** and **CE-ANa2e.**

**Example 7c: Homopolymers of ATBS P5 according to the invention and comparative polymers P6/P6c-e (CE)**

Polymer 5 **P5** is prepared according to the protocol described for **P1** using 800 g of deionised water and 500 g of ATBS.Na $\mathbf{A_{Na}2a}$**.**

The comparative polymer 6 **P6** (CE) is obtained according to the protocol described for **P1** replacing ATBS.Na $\mathbf{A_{Na}2a}$ with 93.1 g of ATBS $\mathbf{A_H}$ and 36 g of sodium hydroxide at 50% concentration by weight in water.

The comparative polymers **P6c** to **P6e** (CE) are prepared according to the protocol described for **P1** replacing ATBS.Na $\mathbf{A_{Na}2a}$ with respectively **CE-ANa2c, CE-ANa2d** and **CE-ANa2e.**

**Example 7d: Polymers of ATBS/AM P7 according to the invention and comparative polymers P8/P8c-e**

Polymer 7 **P7** is prepared according to the protocol described for **P1** using 1035 g of deionised water, 520.5 g of acrylamide in 50% solution, 16.2 g of urea and 285 g of ATBS.Na **$A_{Na}$2a.**

The polymer 8 **P8** (CE) is obtained according to the protocol described for **P1** replacing ATBS.Na **$A_{Na}$2a** with 93.1 g of ATBS **$A_H$** and 36 g of sodium hydroxide at 50% concentration by weight in water.

The polymers **P8c to P8e** (CE) are prepared according to the protocol described for **P1** replacing ATBS.Na **$A_{Na}$2a** with respectively **CE-ANa2c, CE-ANa2d** and **CE-ANa2e.**

**Examples 8: Preparation of fracturing fluids**

Polymers previously prepared in powder form are dissolved with stirring at a concentration of 10,000 ppm by weight in a brine composed of water, 85 g of sodium chloride (NaCl) and 33.1 g of calcium chloride ($CaCl_2$, $2H_2O$) per litre of brine.

The resulting polymer salt solutions are then injected at a concentration of 0.05 pptg (parts per thousand gallons) into the recirculating brine for the Flow Loop tests that follow.

**Example 9: Flow Loop friction reduction tests**

To assess the friction reduction of each of the polymers, the Flow Loop tank was filled with 20 L of brine (brine described in example 5). The brine was then recirculated through the Flow Loop at a rate of 24 gallons per minute (1 gallon = 3.78541 litres). The polymer is added at a concentration of 0.5 pptg to the recirculating brine. The percentage reduction in friction is determined by measuring pressure variations within the Flow Loop.

The results are presented on Figures 9 to 12.

The results demonstrate that the injection fluids prepared using the polymers according to the invention provide improved friction reduction. Thus the use of crystals of ATBS.Na according to the invention for preparing ATBS-based polymers **P1, P3, P5** and **P7** leads to better friction reduction properties of the fluids.

## Claims

1. Fracturing fluid comprising at least one aqueous phase, a proppant and at least one water-soluble polymer of 2-acrylamido-2-methylpropanesulphonic acid, 2-acrylamido-2-methylpropanesulfonic acid being, before polymerization, a crystalline form of the sodium salt of 2-acrylamido-2-methylpropanesulfonic acid having a powder X-ray diffraction pattern comprising peaks at 11.7°; 12.2°; 13.2°; 13.5°; 15.6°; 16.8°; 17.8°; 18.5°; 19.1°; 20.6°; 21.4°; 23.3°; 25.1°; 25.8°; 26.9°; 29.1°; 29.5°; 31.0°; 33.0°; 33.6°; 34.4°; 35.2°; 35.9°; 37.1°; 38.4°; 39.6°; 41.1°; 42.9°; 45.1°; 46.0°; 47.2°; 47.6° degrees 2-theta.

2. Fracturing fluid according to claim 1, ***characterized* in that** at least 50 mol% of 2-acrylamido-2-methylpropanesulphonic acid of the water-soluble polymer is, before polymerization, in the crystalline form of the sodium salt.

3. Fracturing fluid according to claim 1, ***characterized* in that** the water-soluble polymer is a polymer of the crystalline form of 2-acrylamido-2-methylpropanesulphonic acid sodium salt, and of at least one hydrophilic monomer chosen from non-ionic monomers, anionic monomers, cationic monomers, zwitterionic monomers and mixtures thereof.

4. Fracturing fluid according to claim 1 or 3, ***characterized* in that** the water-soluble polymer comprises between 1 and 100 mol% of 2-acrylamido-2-methylpropanesulphonic acid, at least 50 mol% of 2-acrylamido-2-methylpropanesulphonic acid being, before polymerization, in the crystalline form of the sodium salt.

5. Fracturing fluid according to any one of the preceding claims, ***characterized* in that** the water-soluble polymer is a polymer of 2-acrylamido-2-methylpropanesulfonic acid in the crystalline form of the sodium salt and of a salt of acrylic acid, or an anionic polymer of 2-acrylamido-2-methylpropanesulfonic acid in the crystalline form of the sodium salt and of a hydrolyzable non-ionic monomer.

6. Fracturing fluid according to any one of the preceding claims, ***characterized* in that** the fracturing fluid comprises between 0.001% and 1% by weight of water-soluble polymer with respect to the total weight of the fracturing fluid.

7. Method for preparing a fracturing fluid according to any one of the preceding claims, by adding, to water or a brine, at

least one water-soluble polymer of the crystalline form of the sodium salt of 2-acrylamido-2-methylpropanesulphonic acid, and wherein the water-soluble polymer is, before the formation of the fracturing fluid:

- either in the form of powder;
- or in the form of a water-in-oil inverse emulsion;
- or in the form of an aqueous or oily multiphase particulate suspension,

the crystalline form of the sodium salt of 2-acrylamido-2-methylpropanesulphonic acid having an X-ray powder diffraction pattern comprising peaks at 11.70°; 12.20°; 13.2°; 13.5°; 15.60°; 16.80°; 17.80°; 18.5°; 19.1°; 20.6°; 21.40°; 23.3°; 25.1°; 25.8°; 26.9°; 29.10°; 29.50°; 31.0°; 33°; 33.6°; 34.4°; 35.2°; 35.9°; 37.1°; 38.4°; 39.6°; 41.10°; 42.90°; 45.10°; 46.0°; 47.2°; 47.6 degrees 2-theta.

**8.** Method according to claim 7, ***characterized* in that** the water-soluble polymer is, before formation of the fracturing fluid, in powder form with an average polymer particle size of less than 1.5 millimetres.

**9.** Method according to claim 7, ***characterized* in that** the fracturing fluid is, before the formation of the fracturing fluid, in the form of a water-in-oil inverse emulsion, the concentration of water-soluble polymer in the emulsion is preferably between 5 and 60% by weight relative to the weight of the emulsion.

**10.** Method according to any of claims 7 to 9, ***characterized* in that** the water-in-oil inverse emulsion comprises between 0.01% and 70% by weight of an organic salt and/or an inorganic salt relative to the weight of the emulsion.

**11.** Method according to claim any of claims 7 to 10, ***characterized* in that** the water-soluble polymer is, before formation of the fracturing fluid, in the form of an aqueous multiphase particulate suspension comprising:

- 15 to 60% by weight of at least one water-soluble polymer in the form of solid particles with an average size of between 5 and 500 μm;
- 15 to 45% by weight of at least one alkali metal salt and/or at least one alkaline-earth metal salt;
- at least one viscosifying agent other than the water-soluble polymer according to the invention;
- at least 10% by weight of water; and

said suspension having a Brookfield viscosity of between 500 and 20,000 cps at a temperature of 20°C; and said suspension having a density of between 1.1 and 2 $kg.L^{-1}$.

**12.** Method according to any of claims 7 to 10, ***characterized* in that** the water-soluble polymer is, before formation of the fracturing fluid, in the form of an oily multiphase particulate suspension comprising:

- 15 to 60% by weight of at least one water-soluble polymer in the form of solid particles with an average size of between 5 and 500 μm;
- at least one viscosifying agent other than the water-soluble polymer according to the invention;
- at least 10% by weight of oil; and

said suspension having a Brookfield viscosity of between 500 and 20,000 cps at a temperature of 20°C; and said suspension having a density of between 0.6 and 1.4 $kg.L^{-1}$.

**13.** Method for the hydraulic fracturing of an unconventional underground oil or gas reservoir that comprises preparing a fracturing fluid according to any one of claims 1 to 6 and injecting said fracturing fluid into the underground reservoir.

**14.** Method for reducing the friction of a fracturing fluid in an operation for the hydraulic fracturing of an unconventional underground oil or gas reservoir that comprises preparing a fracturing fluid according to any one of claims 1 to 6 and injecting said fracturing fluid into an underground reservoir.

## Patentansprüche

**1.** Fracturing-Fluid, die mindestens eine wässrige Phase, ein Stützmittel und mindestens ein wasserlösliches Polymer von 2-Acrylamido-2-methylpropansulfonsäure enthält, wobei die 2-Acrylamido-2-methylpropansulfonsäure vor der Polymerisation eine kristalline Form des Natriumsalzes von 2-Acrylamido-2-methylpropansulfonsäure ist, das ein Röntgenpulverdiffraktogramm mit Spitzen bei 11,7°; 12,2°; 13,2°; 13,5°; 15,6°; 16,8°; 17,8°; 18,5°; 19,1°; 20,6°; 21,4°; 23,3°; 25,1°; 25,8°; 26,9°; 29,1°; 29,5°; 31,0°; 33,0°; 33,6°; 34,4°; 35,2°; 35,9°; 37,1°; 38,4°; 39,6°; 41,1°; 42,9°; 45,1°;

46,0°; 47,2°; 47,6° Grad 2-Theta aufweist.

2. Fracturing-Fluid nach Anspruch 1, **dadurch *gekennzeichnet,* dass** mindestens 50 Mol-% der 2-Acrylamido-2-methylpropansulfonsäure des wasserlöslichen Polymers vor der Polymerisation in kristalliner Form des Natriumsalzes vorliegt.

3. Fracturing-Fluid nach Anspruch 1, **dadurch *gekennzeichnet,* dass** das wasserlösliche Polymer ein Polymer der kristallinen Form des Natriumsalzes der 2-Acrylamido-2-methylpropansulfonsäure und mindestens eines hydrophilen Monomers ist, das unter den nichtionischen Monomeren, den anionischen Monomeren, den kationischen Monomeren, den zwitterionischen Monomeren und deren Mischungen ausgewählt ist.

4. Fracturing-Fluid nach Anspruch 1 oder 3, **dadurch *gekennzeichnet,* dass** das wasserlösliche Polymer zwischen 1 und 100 Mol-% 2-Acylamido-2-methylpropansulfonsäure enthält, wobei mindestens 50 Mol-% der 2-Acylamido-2-methylpropansulfonsäure vor der Polymerisation in der kristallinen Form des Natriumsalzes vorliegen.

5. Fracturing-Fluid nach einem der vorhergehenden Ansprüche, **dadurch *gekennzeichnet,* dass** das wasserlösliche Polymer ein Polymer von 2-Acrylamido-2-methylpropansulfonsäure in der kristallinen Form des Natriumsalzes und eines Salzes der Acrylsäure oder ein anionisches Polymer von 2-Acylamido-2-methylpropansulfonsäure in der kristallinen Form des Natriumsalzes und eines hydrolysierbaren nichtionischen Monomers ist.

6. Fracturing-Fluid nach einem der vorhergehenden Ansprüche, **dadurch *gekennzeichnet,* dass** das Fracturing-Fluid zwischen 0,001 und 1 Gew.-% wasserlösliches Polymer, bezogen auf das Gesamtgewicht des Fracturing-Fluids, enthält.

7. Verfahren zur Herstellung eines Fracturing-Fluids nach einem der vorhergehenden Ansprüche durch Zugabe mindestens eines wasserlöslichen Polymers der kristallinen Form des Natriumsalzes der 2-Acrylamido-2-methylpropansulfonsäure zu Wasser oder einer Sole, wobei das wasserlösliche Polymer vor der Bildung der Fracturing-Flüssigkeit in folgender Form vorliegt:

   - entweder in Form eines Pulvers;
   - oder in Form einer inversen Wasser-in-Öl-Emulsion;
   - oder in Form einer wässrigen oder öligen mehrphasigen Partikelsuspension, wobei die kristalline Form des Natriumsalzes der 2-Acrylamido-2-methylpropaneslphonsäure ein Röntgenpulverdiffraktogramm mit Spitzen bei 11,70°; 12,20°; 13,2°; 13,5°; 15,60°; 16,80°; 17,80°; 18,5°; 19,1°; 20,6°; 21,40°; 23,3°; 25,1°; 25,8°; 26,9°; 29,10°; 29,50°; 31,0°; 33°; 33,6°; 34,4°; 35,2°; 35,9°; 37,1°; 38,4°; 39,6°; 41,10°; 42,90°; 45,10°; 46,0°; 47,2°; 47,6 Grad 2-Theta aufweist.

8. Verfahren nach Anspruch 7, **dadurch *gekennzeichnet,* dass** das wasserlösliche Polymer vor der Bildung des Fracturing-Fluids in Pulverform mit einer durchschnittlichen Polymerpartikelgröße von weniger als 1,5 Millimetern vorliegt.

9. Verfahren nach Anspruch 7, **dadurch *gekennzeichnet,* dass** das Fracturing-Fluid vor der Bildung des Fracturing-Fluids in Form einer inversen Wasser-in-Öl-Emulsion vorliegt, wobei die Konzentration des wasserlöslichen Polymers in der Emulsion vorzugsweise zwischen 5 und 60 Gew.-%, bezogen auf das Gewicht der Emulsion, beträgt.

10. Verfahren nach einem der Ansprüche 7 bis 9, **dadurch *gekennzeichnet,* dass** die inverse Wasser-in-Öl-Emulsion zwischen 0,01 und 70 Gew.-% eines organischen Salzes und/oder eines anorganischen Salzes, bezogen auf das Gewicht der Emulsion, enthält.

11. Verfahren nach einem der Ansprüche 7 bis 10, **dadurch *gekennzeichnet,* dass** das wasserlösliche Polymer vor der Bildung des Fracturing-Fluids in Form einer wässrigen mehrphasigen Partikelsuspension vorliegt, die Folgendes umfasst:

   - 15 bis 60 Gew.-% mindestens eines wasserlöslichen Polymers in Form von Feststoffpartikeln mit einer durchschnittlichen Größe zwischen 5 und 500 µm ;
   - 15 bis 45 Gew.-% mindestens eines Alkalimetallsalzes und/oder mindestens eines Erdalkalimetallsalzes;
   - mindestens ein anderes Viskositätsmittel als das erfindungsgemäße wasserlösliche Polymer;
   - mindestens 10 Gew.-% Wasser; und

wobei die Suspension eine Brookfield-Viskosität zwischen 500 und 20.000 cps bei einer Temperatur von 20°C aufweist; und
die Suspension eine Dichte zwischen 1,1 und 2 kg.L$^{-1}$ hat.

**12.** Verfahren nach einem der Ansprüche 7 bis 10, **dadurch *gekennzeichnet,* dass** das wasserlösliche Polymer vor der Bildung des Fracturing-Fluds in Form einer öligen mehrphasigen Partikelsuspension vorliegt, die Folgendes umfasst:

- 15 bis 60 Gew.-% mindestens eines wasserlöslichen Polymers in Form von Feststoffpartikeln mit einer durchschnittlichen Größe zwischen 5 und 500 µm ;
- mindestens ein anderes Viskositätsmittel, das nicht das erfindungsgemäße wasserlösliche Polymer;
- mindestens 10 Gew.-% Öl, und

wobei die Suspension eine Brookfield-Viskosität zwischen 500 und 20.000 cps bei einer Temperatur von 20°C aufweist; und
die Dichte dieser Suspension zwischen 0,6 und 1,4 kg.L$^{-1}$ liegt.

**13.** Verfahren zum hydraulischen Fracturing eines unkonventionellen unterirdischen Öl- oder Gasspeichers, der die Herstellung eines Fracturing-Fluids nach einem der Ansprüche 1 bis 6 und die Einspeicherung des Fracturing-Fluids in den unterirdischen Speicher umfasst.

**14.** Verfahren zur Verringerung der Reibung eines Fracturing-Fluids bei einem Vorgang zum hydraulischen Fracturing eines unkonventionellen unterirdischen Öl- oder Gasspeichers, das die Herstellung eines Fracturing-Fluids nach einem der Ansprüche 1 bis 6 und die Einspeicherung des Fracturing-Fluids in einen unterirdischen Speicher umfasst.

## Revendications

**1.** Fluide de fracturation comprenant au moins une phase aqueuse, un agent de soutènement et au moins un polymère hydrosoluble d'acide 2-acrylamido-2-méthylpropane sulfonique,
l'acide 2-acrylamido-2-méthylpropane sulfonique étant, avant polymérisation, une forme cristalline du sel de sodium de l'acide 2-acrylamido-2-méthylpropane sulfonique ayant un diagramme de diffraction des rayons X sur poudre comprenant des pics à 11,7° ; 12,2° ; 13,2° ; 13,5° ; 15,6° ; 16,8° ; 17,8° ; 18,5° ; 19,1° ; 20,6° ; 21,4° ; 23,3° ; 25,10 ; 25,8° ; 26,9° ; 29,1° ; 29,5° ; 31,0° ; 33,0° ; 33,6° ; 34,4° ; 35,2° ; 35,9° ; 37,1° ; 38,4° ; 39,6° ; 41,1° ; 42,9° ; 45,1° ; 46,0° ; 47,2° ; 47,6° degrés 2-thêta.3

**2.** Fluide de fracturation selon la revendication 1, ***caractérisé* en ce qu'**au moins 50 mol% de l'acide 2-acrylamido-2-méthylpropane sulfonique du polymère hydrosoluble est, avant polymérisation, sous la forme cristalline du sel de sodium.

**3.** Fluide de fracturation selon la revendication 1, ***caractérisé* en ce que** le polymère hydrosoluble est un polymère de la forme cristalline du sel de sodium de l'acide 2-acrylamido-2-méthylpropane sulfonique, et d'au moins un monomère hydrophile choisi parmi les monomères non ioniques, les monomères anioniques, les monomères cationiques, les monomères zwitterioniques et leurs mélanges.

**4.** Fluide de fracturation selon la revendication 1 ou 3, ***caractérisé* en ce que** le polymère hydrosoluble comprend entre 1 et 100 mol% d'acide 2-acrylamido-2-méthylpropane sulfonique, au moins 50 mol% de l'acide 2-acrylamido-2-méthylpropane sulfonique étant, avant polymérisation, sous la forme cristalline du sel de sodium.

**5.** Fluide de fracturation selon l'une des revendications précédentes, ***caractérisé* en ce que** le polymère hydrosoluble est un polymère d'acide 2-acrylamido-2-méthylpropane sulfonique sous la forme cristalline du sel de sodium et d'un sel de l'acide acrylique, ou un polymère anionique d'acide 2-acrylamido-2-méthylpropane sulfonique sous la forme cristalline du sel de sodium et d'un monomère non ionique hydrolysable.

**6.** Fluide de fracturation selon l'une des revendications précédentes, ***caractérisé* en ce que** le fluide de fracturation comprend entre 0,001% et 1% en poids de polymère hydrosoluble par rapport au poids total du fluide de fracturation.

**7.** Procédé de préparation d'un fluide de fracturation selon l'une des revendications précédentes, par addition, dans de l'eau ou une saumure, d'au moins un polymère hydrosoluble de la forme cristalline du sel de sodium de l'acide 2-acrylamido-2-méthylpropane sulfonique, et dans lequel le polymère hydrosoluble est, avant formation du fluide de

fracturation :

- soit sous forme de poudre ;
- soit sous forme d'une émulsion inverse eau dans huile ;
- soit sous forme d'une suspension polyphasique particulaire aqueuse ou huileuse la forme cristalline du sel de sodium de l'acide 2-acrylamido-2-méthylpropane sulfonique ayant un diagramme de diffraction des rayons X sur poudre comprenant des pics à 11,70° ; 12,20° ; 13,2° ; 13,5° ; 15,60° ; 16,80° ; 17,80° ; 18,5° ; 19,1° ;20,6° ; 21,40° ; 23,3° ; 25,1° ; 25,8° ; 26,9° ; 29,10° ; 29,50° ; 31,0° ; 33° ; 33,6° ; 34,4° ; 35,2° ; 35,9° ; 37,1° ; 38,4° ; 39,6° ; 41,10° ; 42,90° ; 45,10° ; 46,0° ; 47,2° ; 47,6° degrés 2-thêta.

**8.** Procédé selon la revendication 7, ***caractérisé*** **en ce que** le polymère hydrosoluble est, avant formation du fluide de fracturation, sous forme de poudre avec une taille moyenne de particules de polymères inférieure à 1,5 millimètres.

**9.** Procédé selon la revendication 7, ***caractérisé*** **en ce que** le polymère hydrosoluble est, avant formation du fluide de fracturation, sous forme d'une émulsion inverse eau dans huile, la concentration en polymère hydrosoluble dans l'émulsion étant comprise entre 5 et 60 % en poids par rapport au poids de l'émulsion.

**10.** Procédé selon l'une des revendications 7 à 9, ***caractérisé*** **en ce que** l'émulsion inverse eau dans huile comprend entre 0,01% et 70% en poids d'un sel organique et/ou d'un sel inorganique par rapport au poids de l'émulsion.

**11.** Procédé selon l'une des revendications 7 à 10, ***caractérisé*** **en ce que** le polymère hydrosoluble est, avant formation du fluide de fracturation, sous forme d'une suspension polyphasique particulaire aqueuse comprenant :

- 15 à 60 % en poids d'au moins un polymère hydrosoluble sous forme de particules solides de taille moyenne comprise entre 5 et 500 μm ;
- 15 à 45 % en poids d'au moins un sel de métal alcalin et/ou d'au moins un sel d'un métal alcalino-terreux ;
- au moins un agent viscosifiant différent du polymère hydrosoluble selon l'invention ;
- au moins 10 % en poids d'eau ; et

ladite suspension ayant une viscosité Brookfield comprise entre 500 et 20000 cps à une température de 20°C, et ladite suspension ayant une masse volumique comprise entre 1,1 et 2 $kg.L^{-1}$.

**12.** Procédé selon l'une des revendications 7 à 10, ***caractérisé*** **en ce que** le polymère hydrosoluble est, avant formation du fluide de fracturation, sous forme d'une suspension polyphasique particulaire huileuse comprenant :

- 15 à 60 % en poids d'au moins un polymère hydrosoluble sous forme de particules solides de taille moyenne comprise entre 5 et 500 μm ;
- au moins un agent viscosifiant différent du polymère hydrosoluble selon l'invention ;
- au moins 10% en poids d'huile ; et

ladite suspension ayant une viscosité Brookfield comprise entre 500 et 20000 cps à une température de 20°C, et ladite suspension ayant une masse volumique comprise entre 0,6 et 1,4 $kg.L^{-1}$.

**13.** Procédé de fracturation hydraulique d'un réservoir souterrain non conventionnel d'huile ou de gaz, comprenant la préparation d'un fluide de fracturation selon l'une des revendications 1 à 6, et l'injection dudit fluide de fracturation dans un réservoir souterrain.

**14.** Procédé de réduction de friction d'un fluide de fracturation dans une opération de fracturation hydraulique d'un réservoir souterrain non conventionnel d'huile ou de gaz, comprenant la préparation d'un fluide de fracturation selon l'une des revendications 1 à 6, et l'injection dudit fluide de fracturation dans un réservoir souterrain.

[Fig. 1]

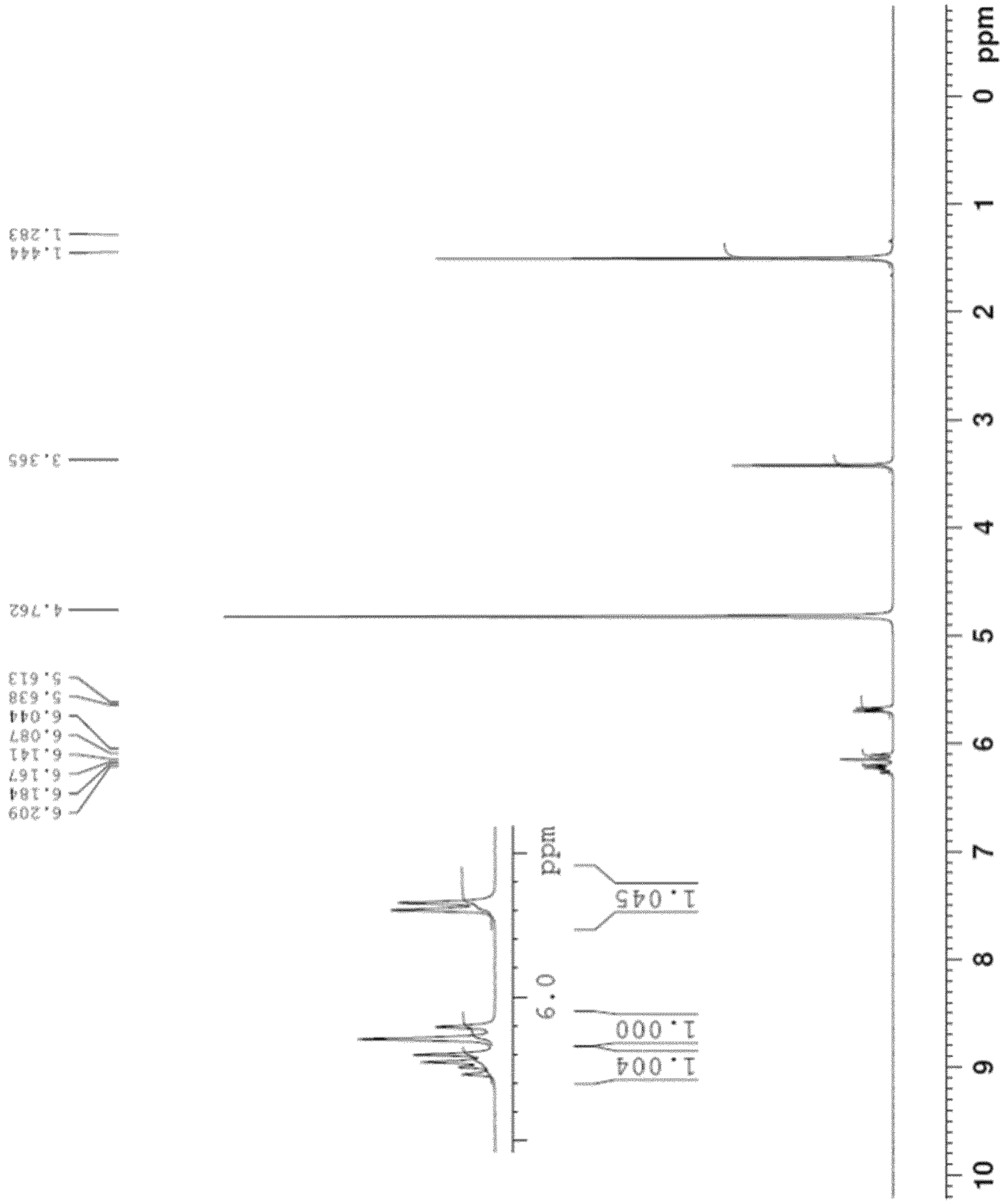
1.283
1.444
3.365
4.762
5.613
5.638
6.044
6.087
6.141
6.167
6.184
6.209
ppm
6.0
1.045
1.000
1.004
ppm
0
1
2
3
4
5
6
7
8
9
10

[Fig. 2]

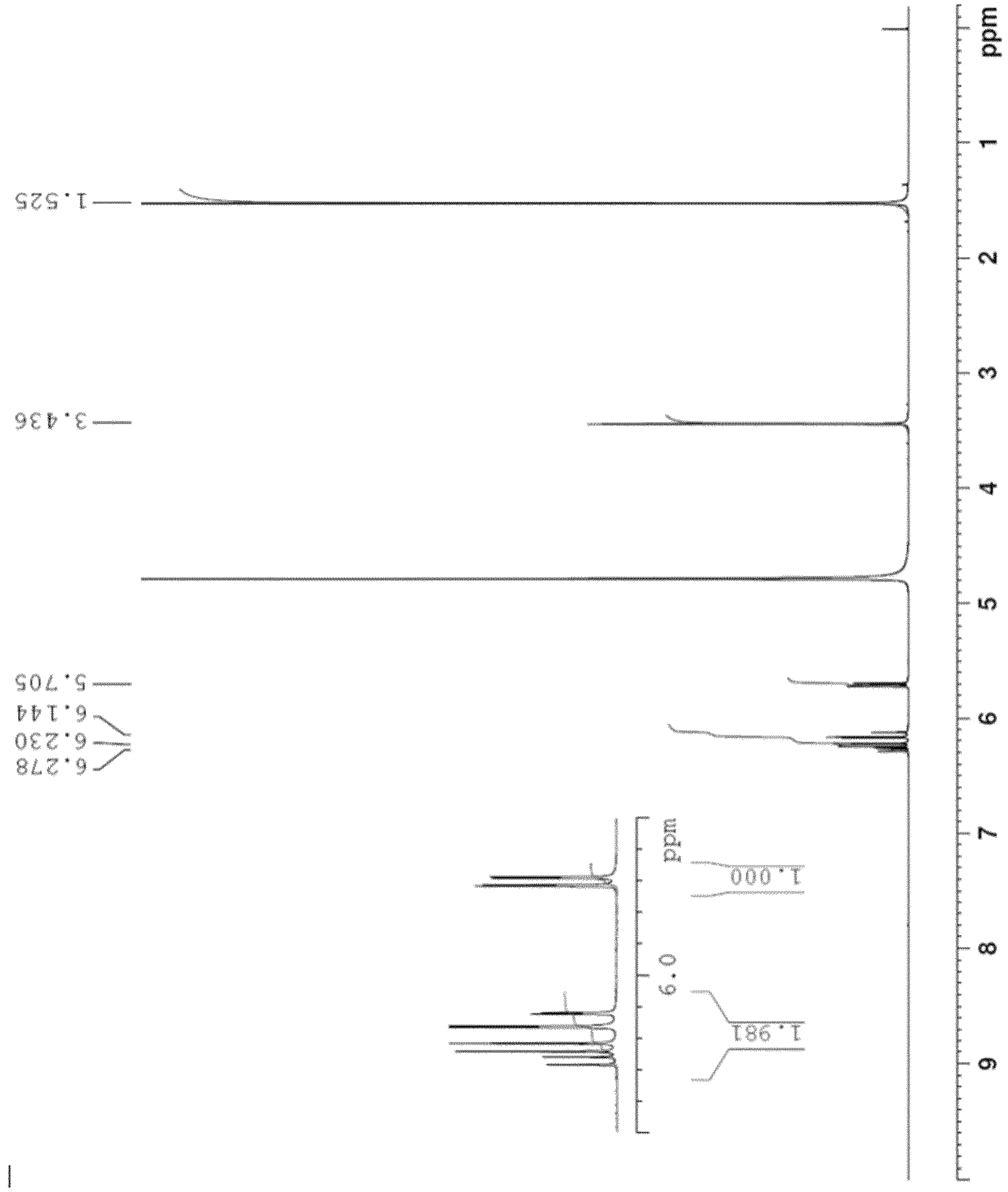

[Fig. 3]

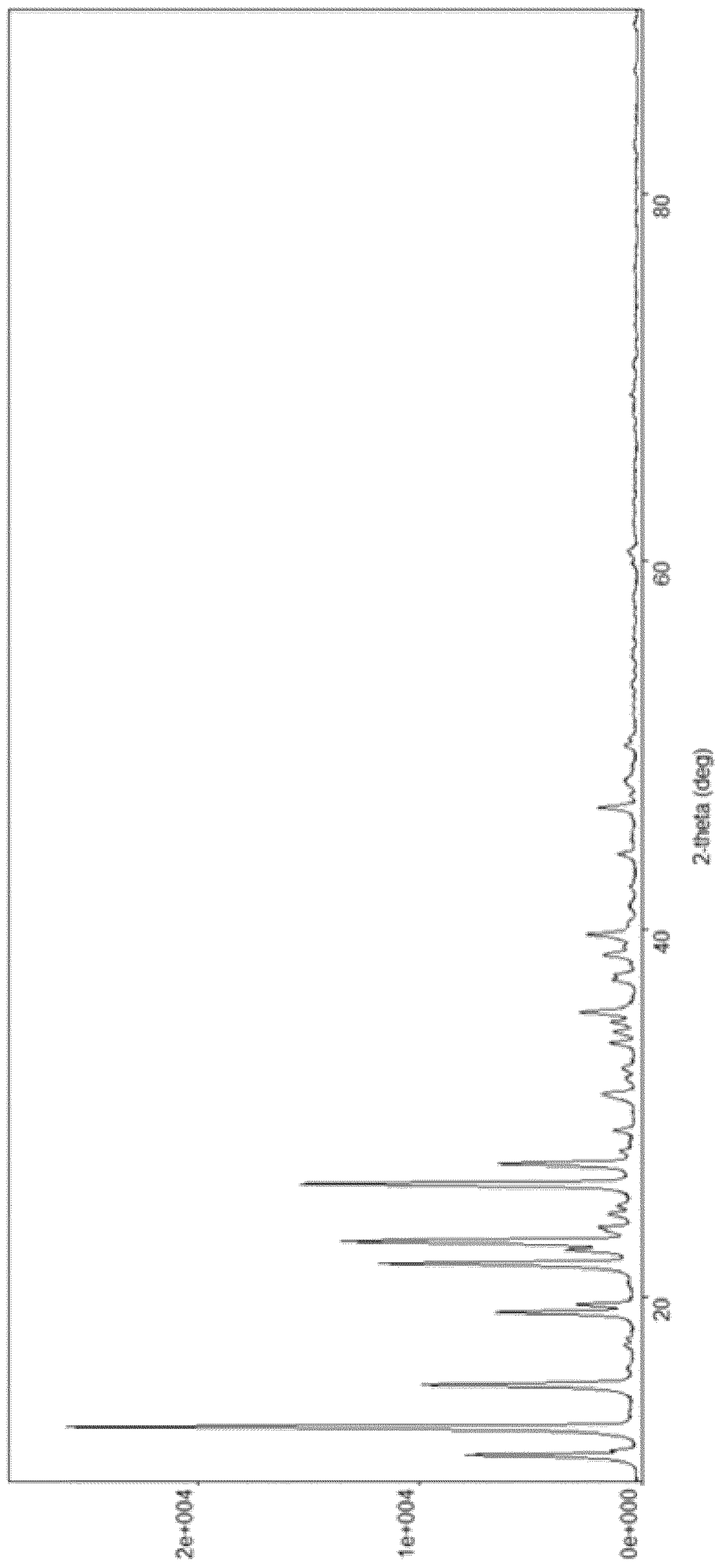

[Fig. 4]

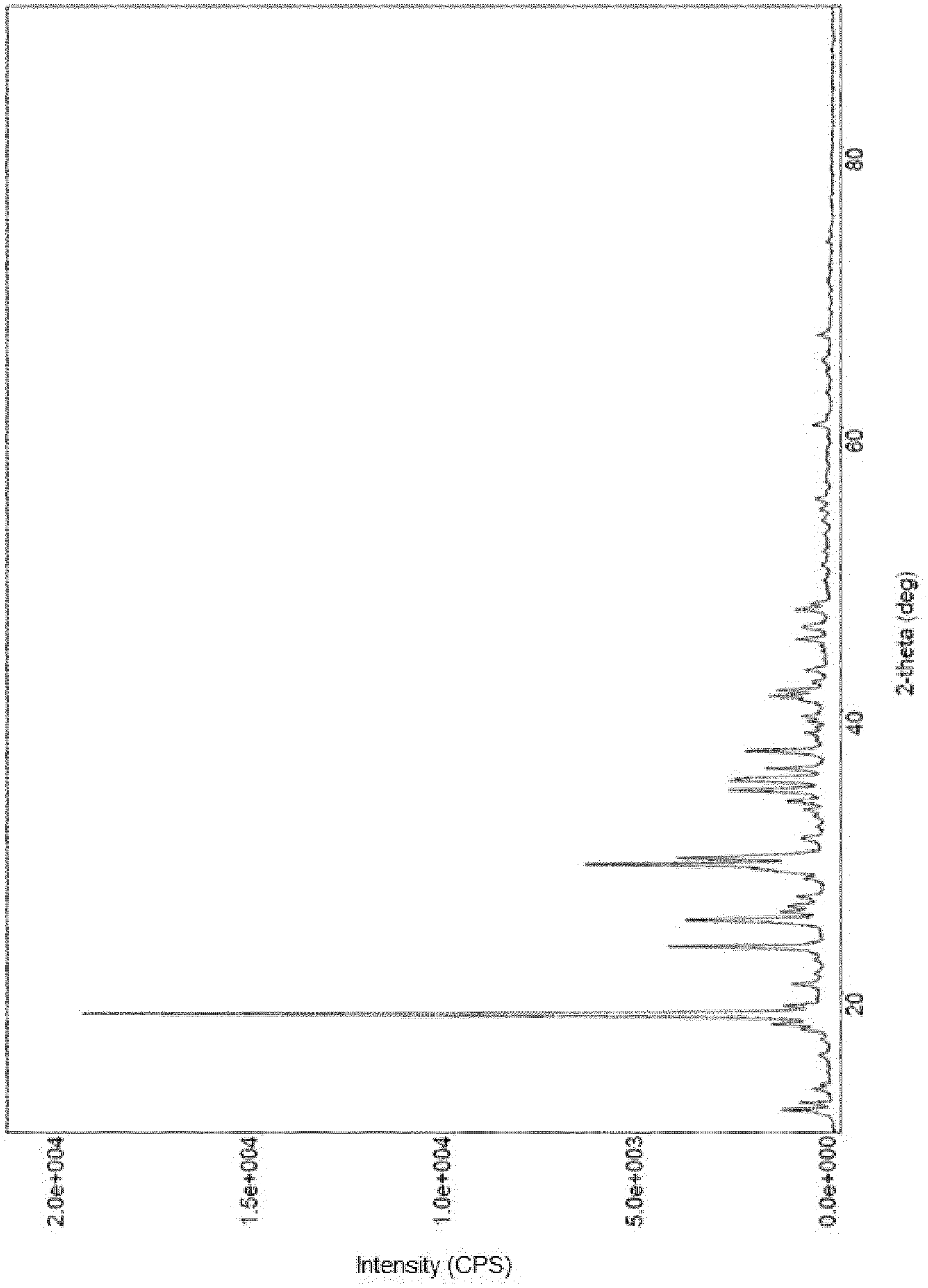
Intensity (CPS)
0.0e+000
5.0e+003
1.0e+004
1.5e+004
2.0e+004
2-theta (deg)
20
40
60
80

[Fig. 5]

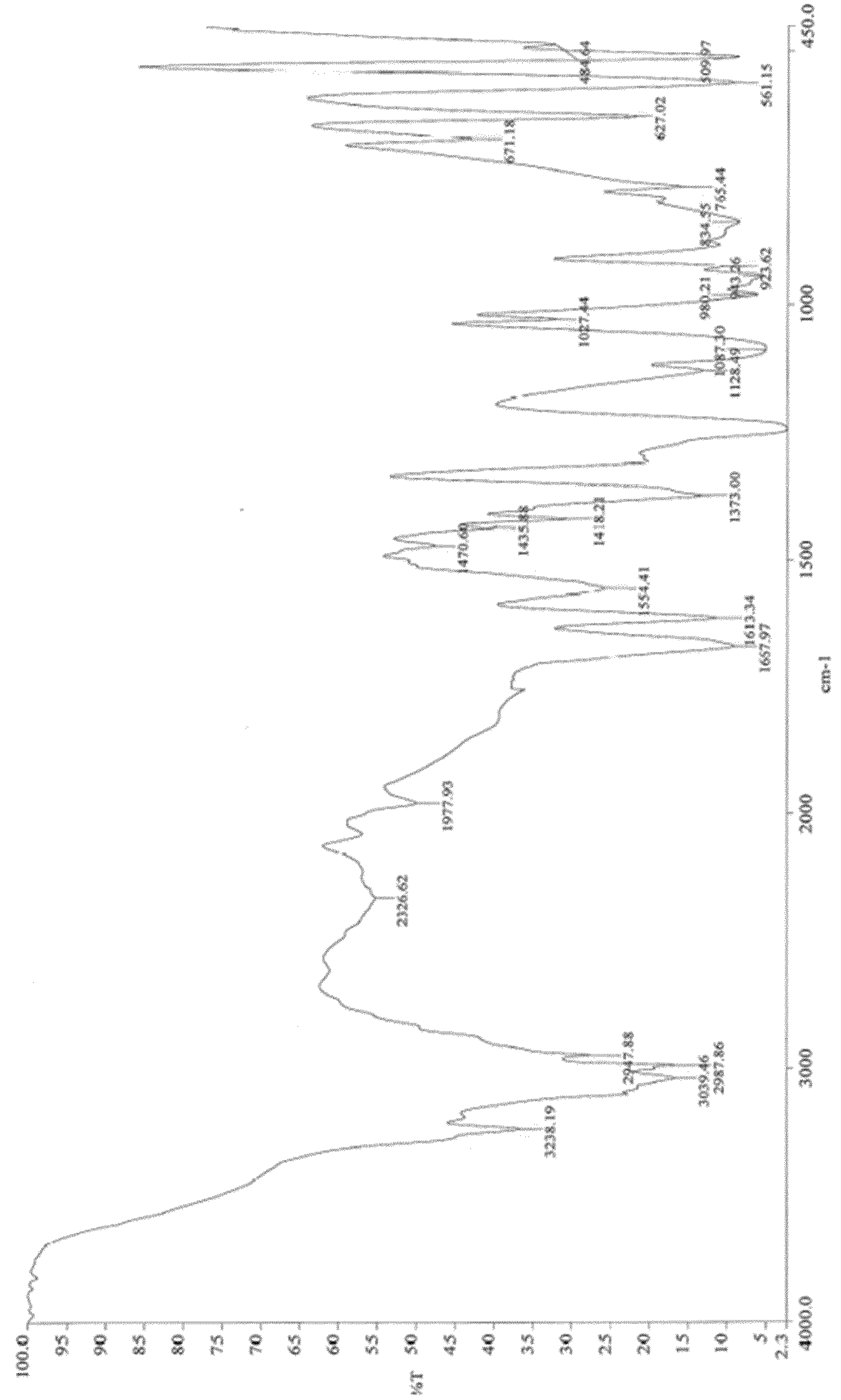
%T
100.0
95
90
85
80
75
70
65
60
55
50
45
40
35
30
25
20
15
10
5
2.3
4000.0
3000
2000
1500
1000
450.0
cm-1
3238.19
2947.88
3039.46
2987.86
2326.62
1977.93
1657.97
1613.34
1554.41
1470.00
1373.00
1128.49
1087.30
1027.44
980.21
943.26
923.62
834.55
765.44
671.18
627.02
561.15
509.97
484.64

[Fig. 6]

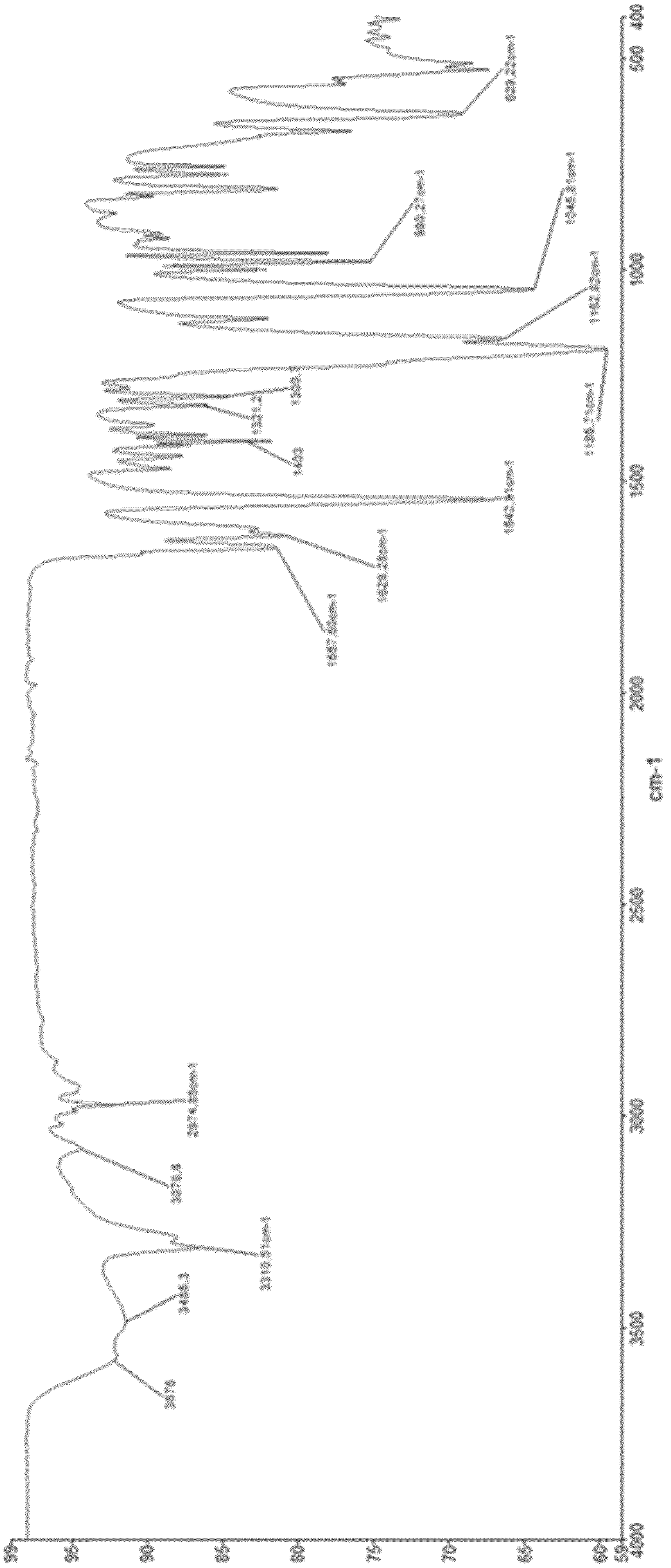

[Fig. 7]

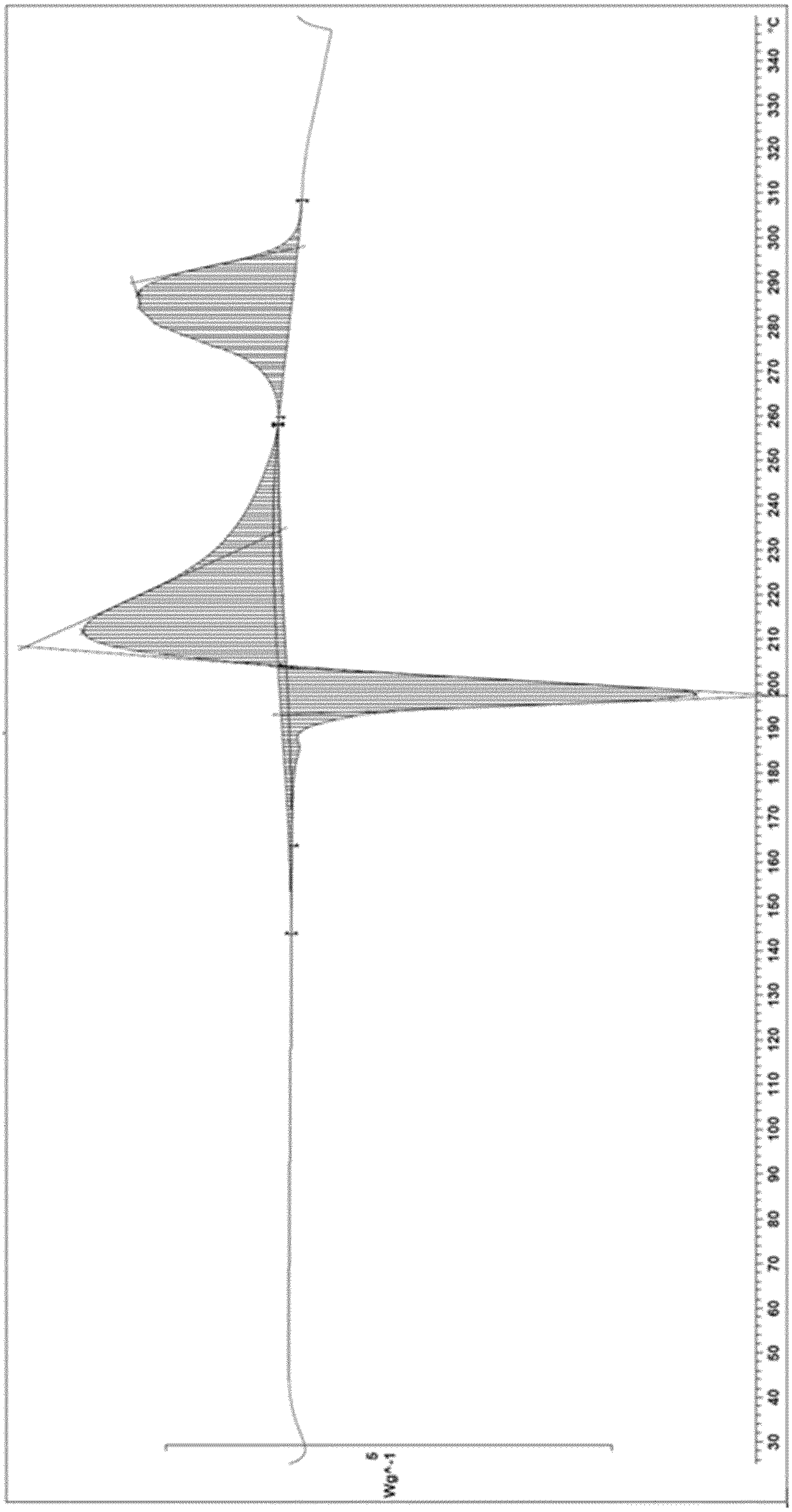
°C
30
40
50
60
70
80
90
100
110
120
130
140
150
160
170
180
190
200
210
220
230
240
250
260
270
280
290
300
310
320
330
340
5
Wg^-1

[Fig. 8]

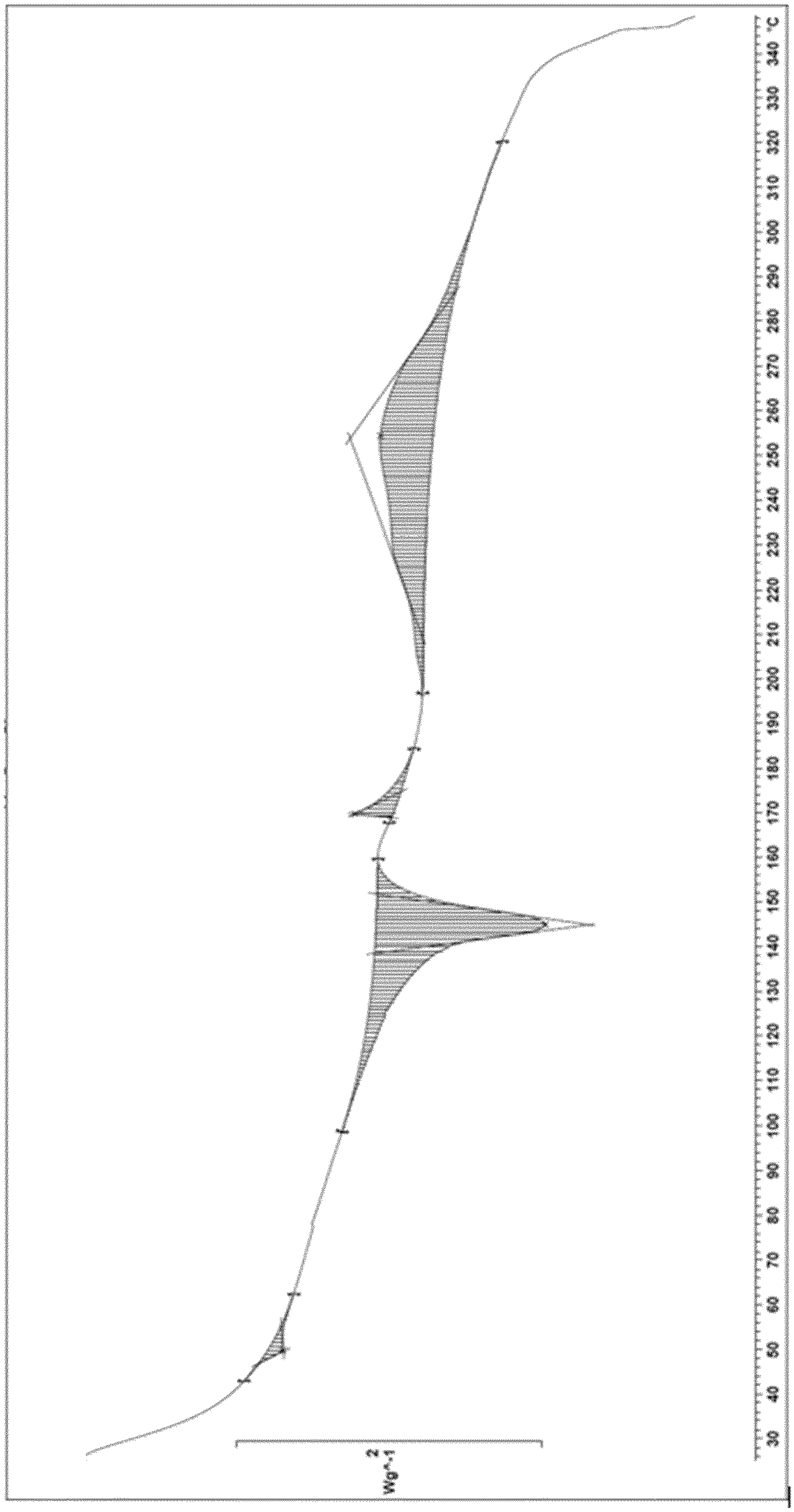
°C
30
40
50
60
70
80
90
100
110
120
130
140
150
160
170
180
190
200
210
220
230
240
250
260
270
280
290
300
310
320
330
340
2
Wg^-1

[Fig. 9]

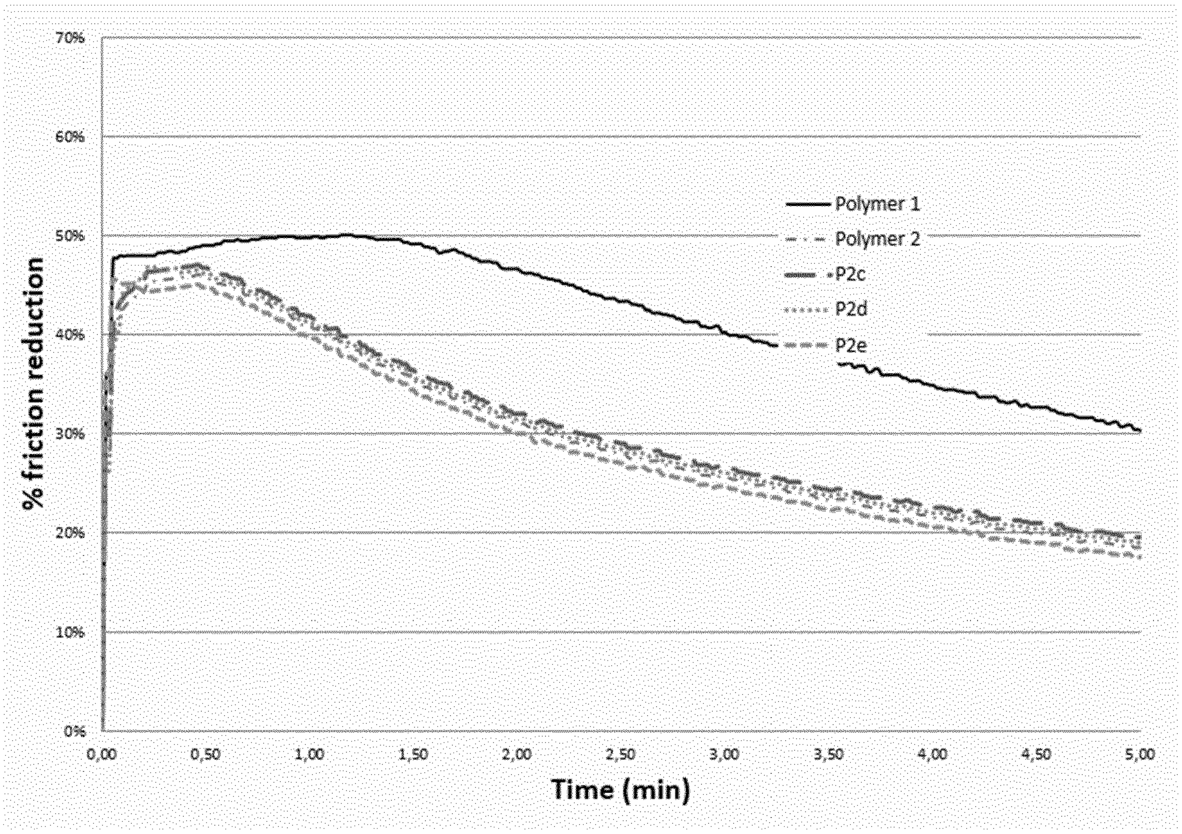
70%
60%
50%
40%
30%
20%
10%
0%
% friction reduction
0,00
0,50
1,00
1,50
2,00
2,50
3,00
3,50
4,00
4,50
5,00
Time (min)
Polymer 1
Polymer 2
P2c
P2d
P2e

[Fig. 10]

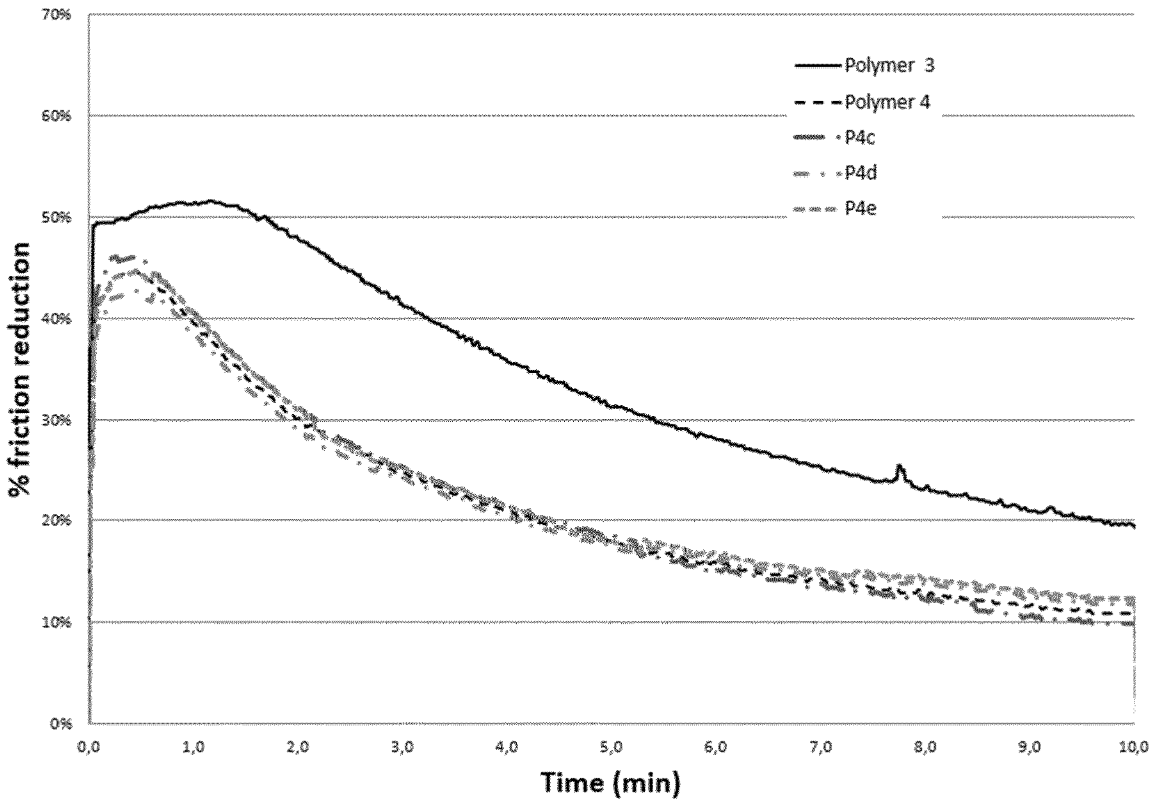
70%
60%
50%
40%
30%
20%
10%
0%
% friction reduction
0,0
1,0
2,0
3,0
4,0
5,0
6,0
7,0
8,0
9,0
10,0
Time (min)
Polymer 3
Polymer 4
P4c
P4d
P4e

[Fig. 11]

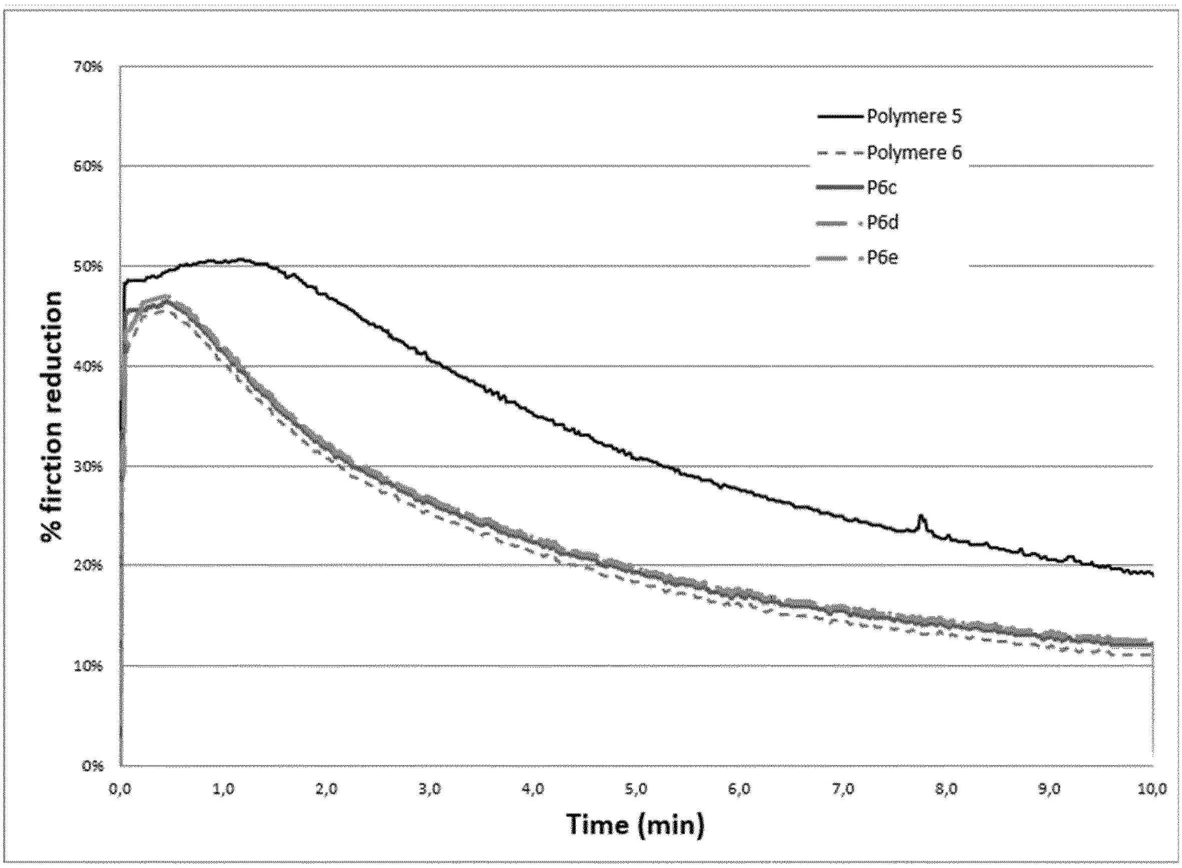
70%
60%
50%
40%
30%
20%
10%
0%
% firction reduction
0,0
1,0
2,0
3,0
4,0
5,0
6,0
7,0
8,0
9,0
10,0
Time (min)
Polymere 5
Polymere 6
P6c
P6d
P6e

[Fig. 12]

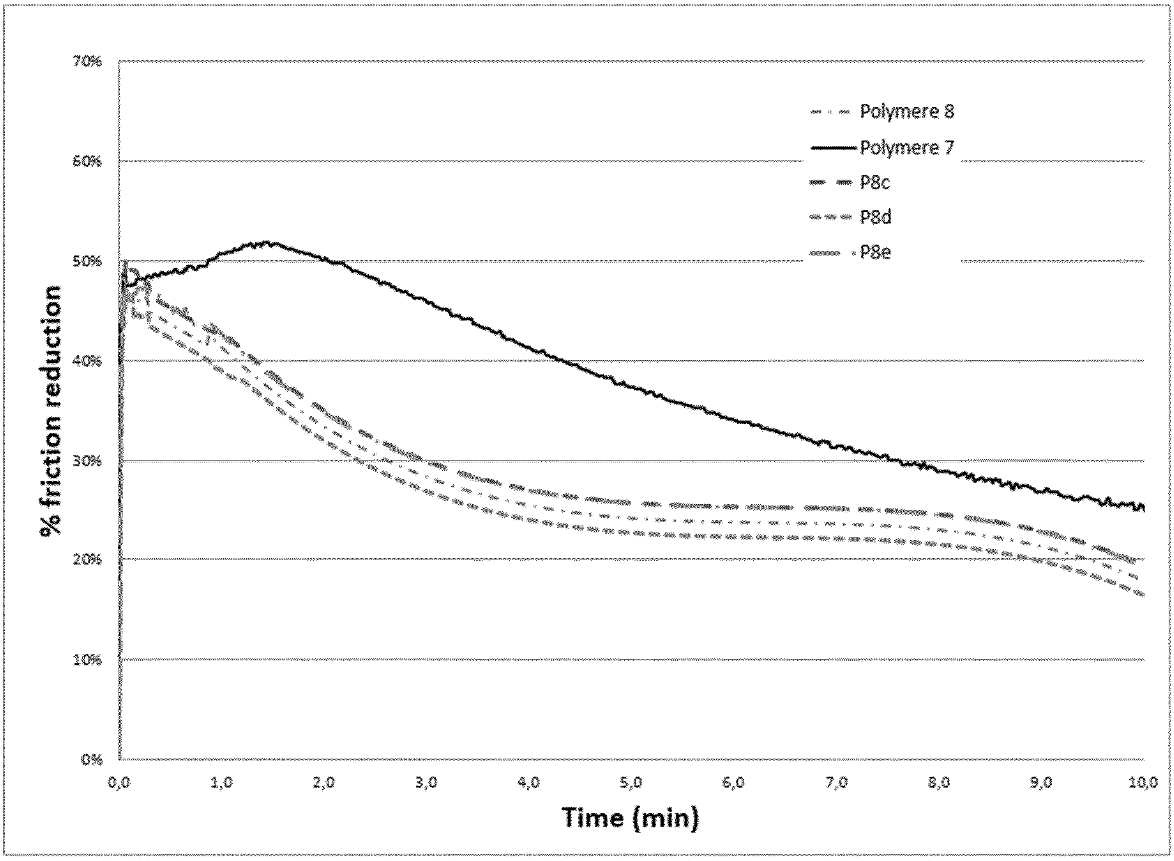
70%
60%
50%
40%
30%
20%
10%
0%
% friction reduction
0,0
1,0
2,0
3,0
4,0
5,0
6,0
7,0
8,0
9,0
10,0
Time (min)
Polymere 8
Polymere 7
P8c
P8d
P8e

[Fig. 13]

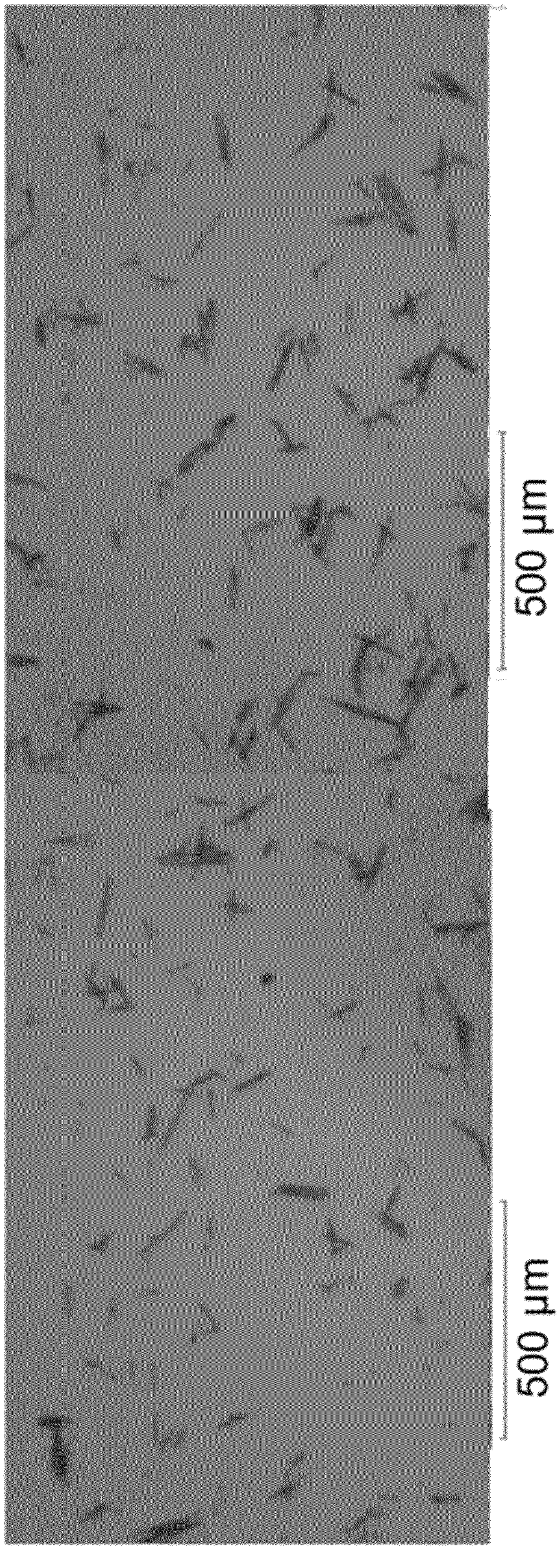

[Fig. 14]

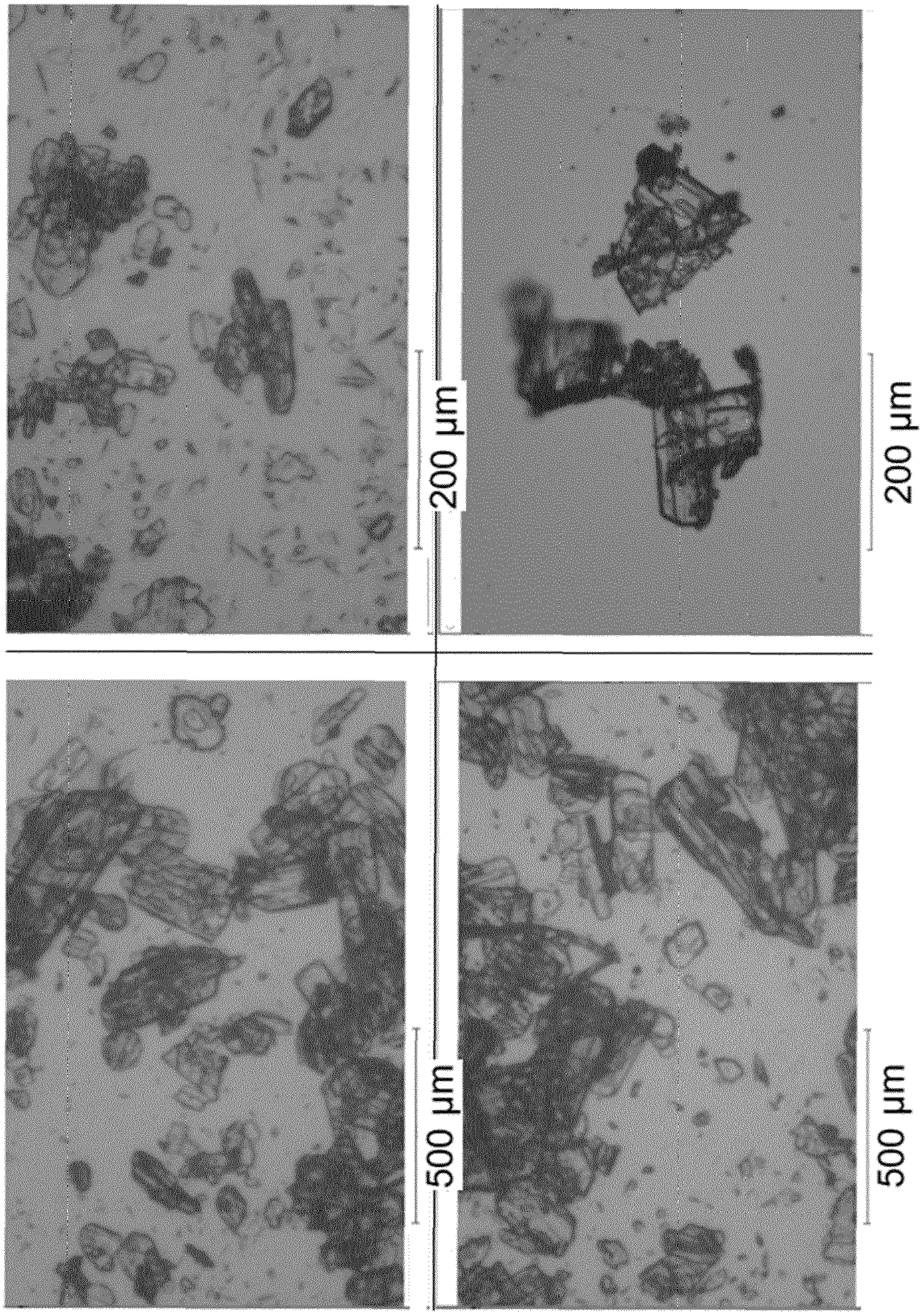

[Fig. 15]

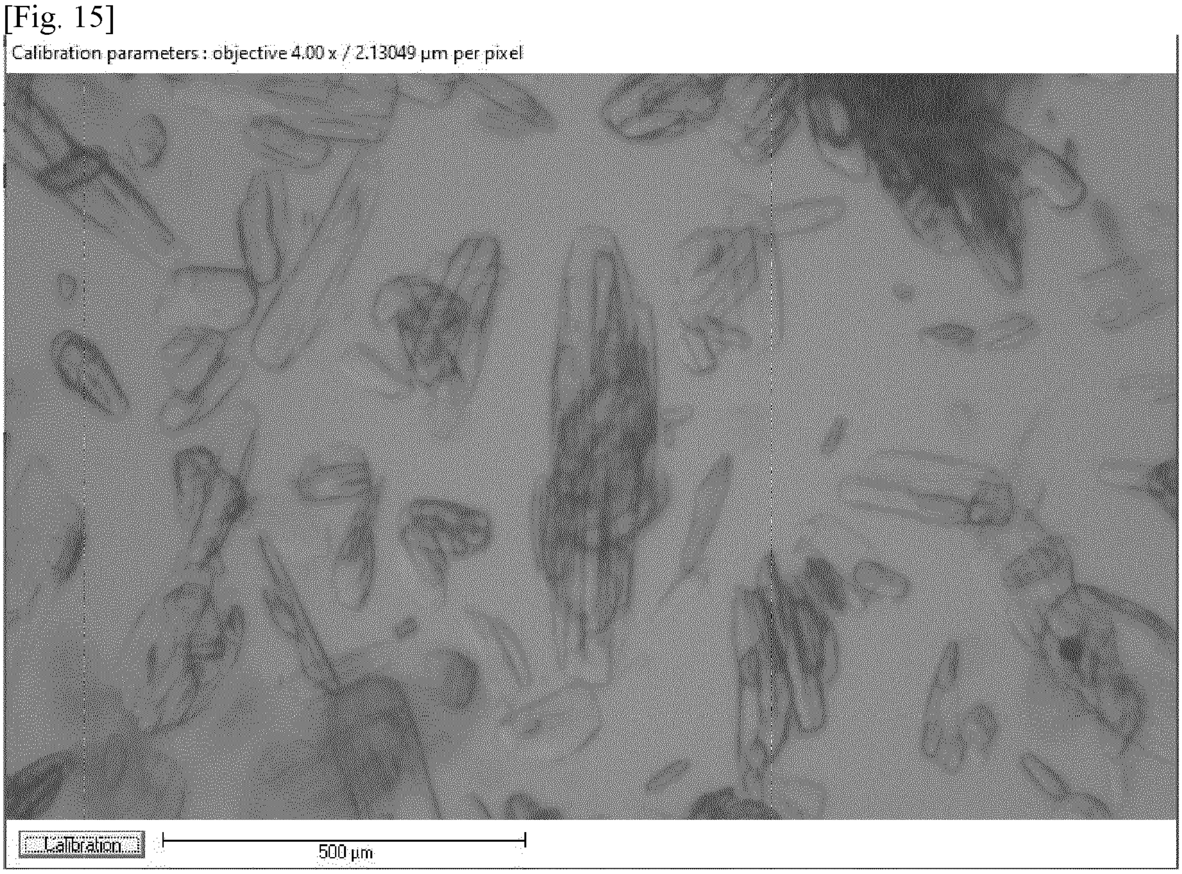
Calibration parameters : objective 4.00 x / 2.13049 µm per pixel
Calibration
500 µm

[Fig. 16]

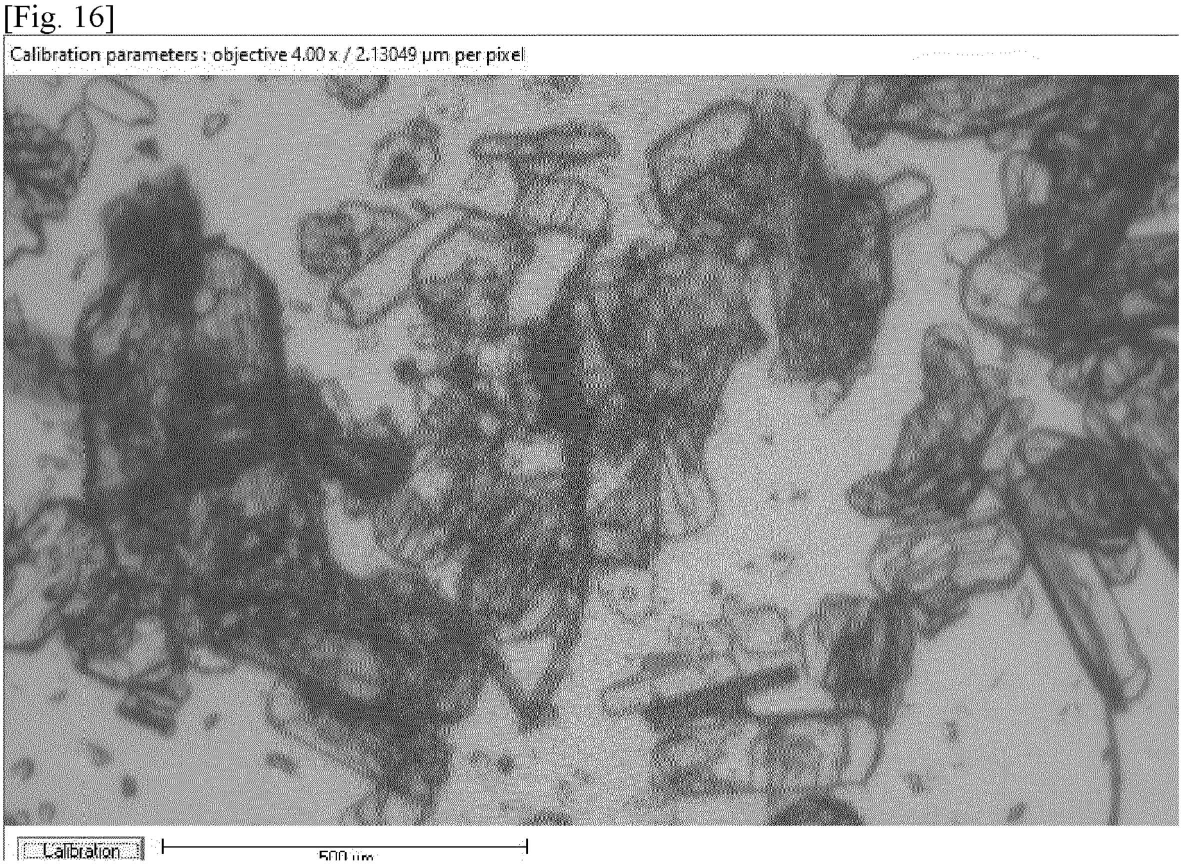
Calibration parameters : objective 4.00 x / 2.13049 µm per pixel
Calibration

[Fig. 17]

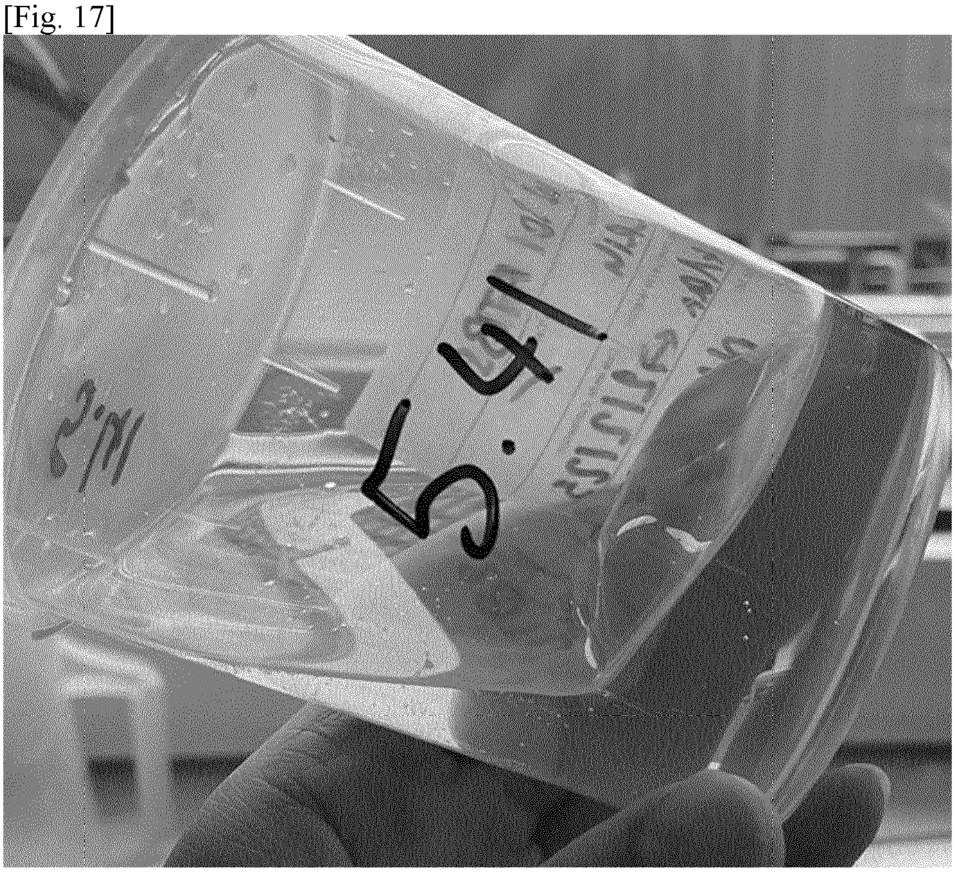


[Fig. 18]

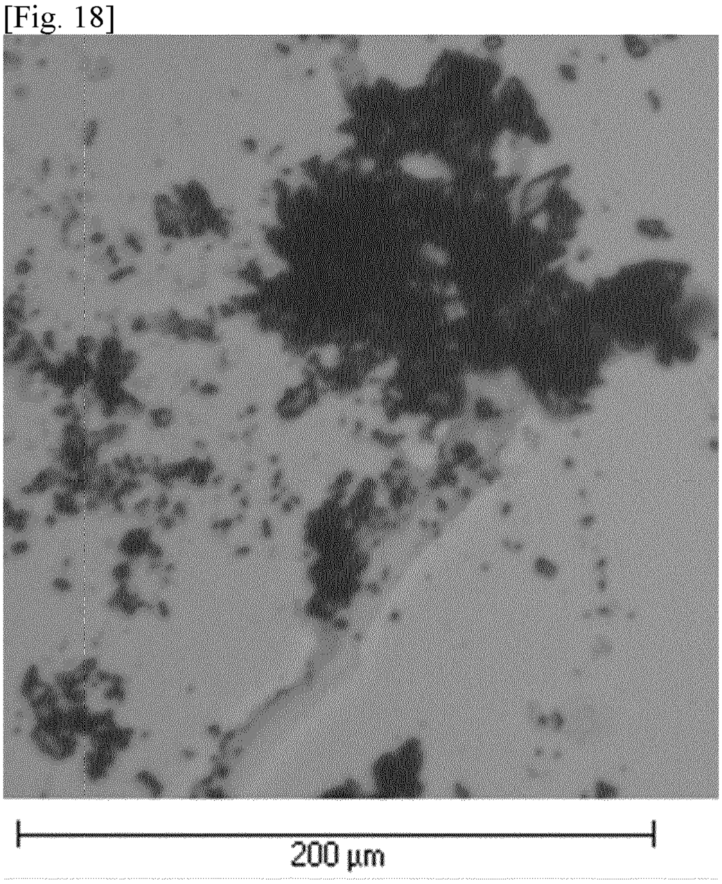

[Fig. 19]

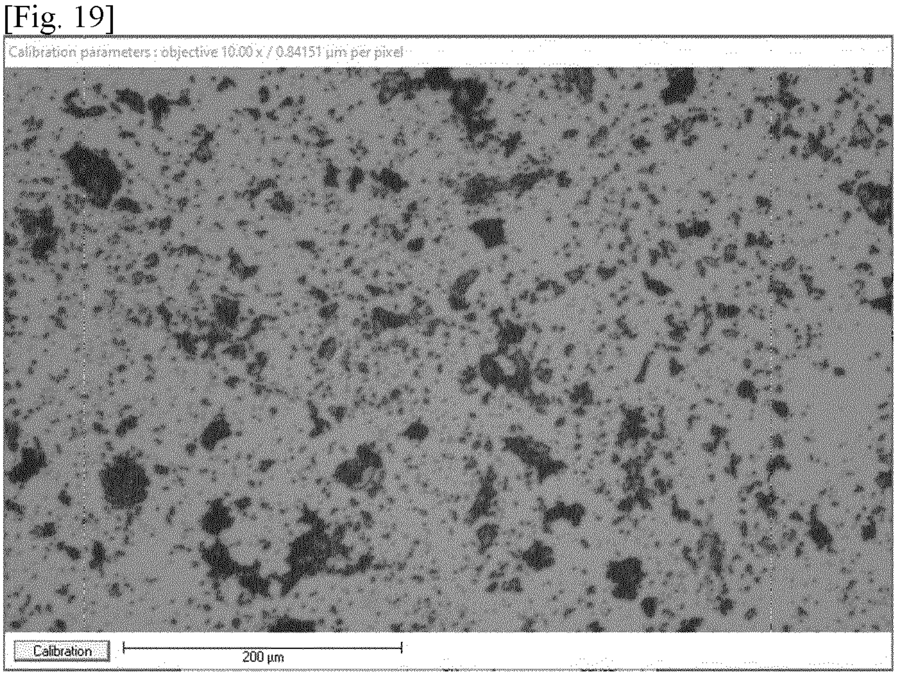
Calibration parameters : objective 10.00 x / 0.84151 µm per pixel
Calibration
200 µm

[Fig. 20]

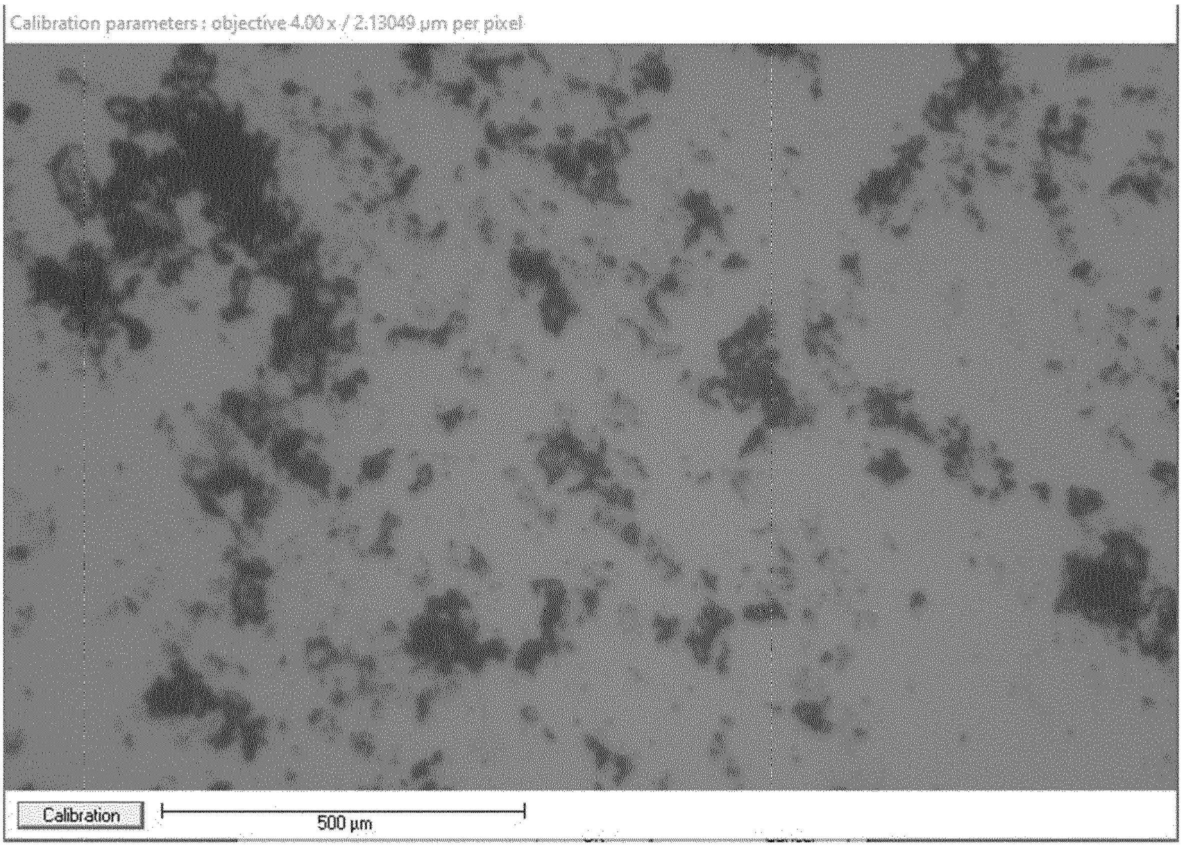
Calibration parameters : objective 4.00 x / 2.13049 µm per pixel
Calibration
500 µm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*


### Patent documents cited in the description

- US 4033415 A
- US 3888312 A
- US 4801389 A
- GB 951147 A
- US 3727689 A
- US 3841402 A
- US 3938594 A
- WO 2018172684 A
- EP 3601222 A
- CN 113528113
- WO 2021123599 A
- EP 2203245 A
- US 6331647 B
- WO 2013079507 A

### Non-patent literature cited in the description

- Les hydrocarbures de roche-mère en France Rapport provisoire - CGIET n° 2011-04-G. *Sustainable Development, Transport and Housing*, April 2011
- **DAVID LOVELESS** ; **JEREMY HOLTSCLAW** ; **RAJESH SAINI** ; **PHIL HARRIS** ; **JEFF FLEMING**. Fracturing Fluid Comprised of Components Sourced Solely from the Food Industry Provides Superior Proppant Transport. *SPE 147206*
- Hydraulic Fracturing 101: What Every Representative, Environmentalist, Regulator, Reporter, Investor, University Researcher, Neighbor and Engineer Should Know About Estimating Frac Risk and Improving Frac Performance in Unconventional Gas and Oil Wells. **GEORGE E. KING**. SPE 152596. Apache Corporation